# EUROPÄISCHE PATENTSCHRIFT

(11) **EP 1 961 606 B1**
(45) Veröffentlichungstag und Bekanntmachung des Hinweises auf die Patenterteilung: **08.08.2012**
(21) Anmeldenummer: 08000946.7
(22) Anmeldetag: 18.01.2008
(51) Int. Cl.: B60K 35/00, B60K 37/06

(54) **Vorrichtung und Verfahren zur interaktiven Informationsausgabe und/oder Hilfestellung für den Benutzer eines Kraftfahrzeugs**
Device and method for interactive information display and/or support for the user of a motor vehicle
Procédé et dispositif d'émission interactive d'informations et/ou d'aide à l'utilisateur d'un véhicule automobile

(30) Priorität: 23.02.2007 DE 102007008835
(43) Veröffentlichungstag der Anmeldung: 27.08.2008
(73) Patentinhaber: Volkswagen Aktiengesellschaft, 38440 Wolfsburg (DE)
(72) Erfinder: Wu, Yongmei, 38108 Braunschweig (DE); Medler, Andreas, 38268 Lengede (DE); Dalchow, Jan-Lars, 38104 Braunschweig (DE); Bendewald, Lennart, 38442 Wolfsburg (DE); Hobik, Peter, 38468 Wolfsburg (DE); Lilienthal, Jörg, 38518 Gifhorn (DE); Specks, Will, 38440 Wolfsburg (DE)

(56) Entgegenhaltungen:
- EP-A2- 1 749 688
- DE-A1- 10 052 654
- DE-A1- 10 117 410
- DE-A1- 19 928 558
- DE-A1-102005 003 535
- DE-A1-102005 017 313
- DE-A1-102005 029 444
- US-A1- 2003 236 600

## Beschreibung

Die Erfindung betrifft eine Vorrichtung und ein Verfahren zur interaktiven Informationsausgabe und/oder Hilfestellung für den Benutzer eines Kraftfahrzeugs.

In Fahrzeugen gemäß dem Stand der Technik sind alle für den Benutzer wissenswerten technischen Merkmale des Kraftfahrzeugs sowie dessen Ausstattungseigentümlichkeiten in der Regel in einem in gedruckter Form vorliegenden Handbuch bzw. Bordbuch enthalten. Zwar verfügen die meisten Fahrzeuge mittlerweile über diverse Diagnosesysteme zur Problemerkennung, sowohl hinsichtlich des Zustands von Fahrzeugkomponenten als auch hinsichtlich von kritischen Fahr- bzw. Fahrersituationen. Doch werden die von einem Diagnosesystem festgestellten Probleme vor oder während der Fahrt dem Benutzer meist lediglich mit Hilfe von Signallämpchen bzw. aufleuchtenden Symbolen oder auch durch kurze Textnachrichten oder Piktogramme angezeigt. Die auf diese Weise übermittelte Information bedeutet, dass ein bestimmtes Problem mit dem Fahrzeug vorliegt, wobei zur Lösung dieses Problems in der Regel der Fälle das Handbuch konsultiert werden muss, welches beispielsweise in gedruckter Form im Handschuhfach vorhanden ist. Das Handbuch wird dabei in der Regel nur dann genutzt, wenn der Fahrer ein Problem mit seinem Fahrzeug bzw. mit dessen Bedienung hat. Die Nutzung des Handbuchs wird gemeinhin als aufwändig, komplex und eher mühsam betrachtet, da viele Benutzer eher ungern längere gedruckte Texte lesen und insbesondere umfangreiche technische Inhalte häufig als abschreckend empfinden.

In der WO 01/27704 A1 ist ein Verfahren zur Erstellung von Unterlagen oder Informationen für ein in der Serie und am Fließband herstellbares technisches Produkt offenbart, wobei während des Produktionsvorgangs unmittelbar am Fließband ein Produktbuch erzeugt wird, die wesentlichen technischen Merkmale des Produktes in das Produktbuch aufgenommen werden, die für die Benutzung und/oder Bedienung des Produktes relevanten Hinweise in dem Produktbuch vermerkt werden und die für das jeweilige Produktexemplar charakteristischen, individuellen Ausstattungseigentümlichkeiten in das diesem Produktexemplar speziell zugeordnete und auf dieses Produktexemplar zugeschnittene Produktbuch aufgenommen werden. Dabei kann das Produktbuch auch als EDV-Datensatz erstellt werden. Dieses Verfahren zielt darauf ab, ein möglichst leicht verständliches und aussagekräftiges Produktbuch unter Vermeidung von unnötiger Lagerhaltung bei möglichst geringen Kosten herzustellen, wobei das Produktbuch auf überflüssige Information so weit wie möglich verzichten soll und dennoch die individuellen Sonderausstattungen eines Produkts berücksichtigen soll. Das Verfahren bietet jedoch keine Unterstützung, wenn der Benutzer beim Vorliegen eines Problems während der Benutzung zunächst aus eigenem Antrieb das Produktbuch konsultieren muss, um mittels eigener Nachforschungen die für das bestehende Problem relevante Information darin zu lokalisieren und zu identifizieren, sich diese dann anzueignen, auszuwerten und gemäß dem ihm zur Verfügung stehenden Erfahrungshorizont zu interpretieren, um dann selbst entscheiden zu müssen, welche Maßnahmen er zur Lösung des Problems ergreifen kann oder soll. Dieses Vorgehen ist jedoch selbst bei einem leicht verständlich aufbereiteten Produktbuch wenig komfortabel, komplex und zeitaufwendig und birgt zudem das Risiko von Fehlinterpretationen und -entscheidungen durch den Benutzer.

Die US-Patentschrift 6,009,355 offenbart ein Multimedia-Informations- und Steuerungssystem zur Verwendung in einem Automobil, in welchem mindestens eine Schnittstelle eingesetzt wird, die es einem Benutzer ermöglicht, auf Informationen hinsichtlich des Automobils und der Fahrzeugsteuerungsfunktionen in effizienter Weise zuzugreifen. Der Benutzer kann dabei eine aus einer Mehrzahl von angezeigten Optionen auf einem Bildschirm einer solchen Schnittstelle auswählen. Durch Audio-, Video- und/oder Textmedien wird der Benutzer mit Information hinsichtlich der ausgewählten Option sowie der damit korrespondierenden Fahrzeugfunktion versorgt. Nachdem der Benutzer auf diese Weise informiert wurde, kann er die ausgewählte Option zum Steuern der entsprechenden Fahrzeugfunktion aktivieren. Die Verwendung des Informations- und Steuerungssystems hängt dabei jedoch ausschließlich von einer aktiven Eingabe durch den Benutzer mittels der Schnittstelle ab, d.h., ohne eine Anfrage des Benutzers wird vom System auch keine Information ausgegeben. Besteht ein fahrzeugspezifisches Problem, so muss dieses zunächst von dem Benutzer als solches erkannt werden, bevor er dann selbst aktiv durch die Ebenen des Bedienungsmenüs des Informationssystems navigieren muss, um die für seine aktuellen Belange relevante Information aufzufinden. Dies birgt zum einen das Risiko von Fehlinterpretationen durch den Benutzer und beschränkt zum anderen die Anwendungsmöglichkeiten des Systems insbesondere auf Situationen, in denen das Fahrzeug steht und der Benutzer sich nicht auf den Straßenverkehr konzentrieren muss.

Aus der DE 10 2005 003 535 A1 beinhaltet die Merkmale des Oberbegriffs des Ansprüche 1 und 19 ist eine Einrichtung in einem Kraftfahrzeug für eine optische und akustische Informationsausgabe beschrieben. Die Informationsausgabe soll so erfolgen, dass der Fahrer möglichst wenig vom Fahrgeschehen abgelenkt wird. Hierfür wird bei einer Informationsausgabe mittels optischer oder akustischer Signaleinrichtungen die Blickrichtung des Informationsempfängers erfasst und die Informationsausgabe in Abhängigkeit der erfassten Blickrichtung gesteuert. Die optischen Informationen werden nur ausgegeben, wenn der Informationsempfänger seinen Blick auf die Signaleinrichtung für deren Wiedergabe richtet. Ebenso werden mittels der akustischen Signaleinrichtung nur Informationen ausgegeben, wenn der Informationsempfänger seinen Blick auf einen für die Aktivierung der jeweiligen Informationsausgabe definierten Bereich im Fahrzeug richtet.

Aus der DE 10 2005 017 313 A1 sind ein Verfahren zur Darstellung von Informationen in einem Verkehrsmittel und eine Kombiinstrument für ein Kraftfahrzeug bekannt. Die Informationen werden in Form einer hierarchischen Menüstruktur in stereoskopischer und/oder autostereoskopischer Darstellung ausgegeben. Zwei verschiedene Menüs oder Menüpunkte werden für den Betrachter in verschiedenen Entfernungen dargestellt.

Aus der EP 1 749 688 A2 ist ein Informationssystem für ein Kraftfahrzeug bekannt, welches eine Datenverarbeitungsvorrichtung und eine Anzeigevorrichtung zur Darstellung von gespeicherten Informationen umfasst, die mittels einer Bedieneinrichtung auswählbar und aus einer Speichereinrichtung auslesbar sind. Zur Erhöhung eines Nutzerkomforts des Fahrzeugs handelt es sich bei den Informationen um solche einer Bedienungsanleitung und bei Auswahl einer Information wird die entsprechende Einrichtung des Kraftfahrzeugs aktiviert.

Aus der US 2003/0236600 A1 ist ein in ein Automobil eingebauter Computer bekannt, der eine Bedienungsanleitung des Fahrzeugs darstellt. Der Nutzer kann eine oder mehrere Informationen über das Kraftfahrzeug durch den Computer abrufen, die dann dem Nutzer dargestellt werden. Die Informationen können eine Beschreibung einer bestimmten Funktion oder Vorrichtung des Autos, eine Wartungshistorie und/oder einen aktuellen Zustand von Komponenten des Fahrzeugs umfassen.

In der DE 19941973 A1 ist ein Verfahren und eine Vorrichtung zur aktiven Hilfestellung eines Kraftfahrzeugführers mittels mindestens eines Steuergeräts und einer Ein- und Anzeigeeinheit offenbart. Dabei kann das Steuergerät auf die Daten von fahrzeugzustandsrelevanten Sensoren und Steuergeräten und/oder Komfortsteuergeräten und/oder interne oder externe Datenbanken zugreifen, wodurch eine automatische Unterstützung bei der Kommunikation zwischen dem Kraftfahrzeugführer und dem Fahrzeugsystem gegeben wird. Dabei wird insbesondere durch das Steuergerät ein kritischer Fahrzeugzustand durch Auswertung der Daten der fahrzeugrelevanten Sensoren und Steuergeräten erfasst, sodann eine Liste von möglichen Handlungen des Kraftfahrzeugführers auf den erfassten kritischen Fahrzeugzustand erstellt, der erfasste kritische Fahrzeugzustand und die möglichen Handlungen des Kraftfahrzeugführers werden auf der Anzeigeeinheit dargestellt und eine durch den Kraftfahrzeugführer ausgewählte Handlung wird durch das Steuergerät durchgeführt. Dabei werden die vom System angebotenen Informationen jedoch stets lediglich als Text in Listenform dargestellt. Eine Veränderung dieser Art der Informationsausgabe ist nicht vorgesehen. Da es sich bei dem beschriebenen System auch nicht um eine Informationsvorrichtung, sondern um ein System zur aktiven Hilfestellung durch automatisches Ausführen von Aktionen mittels eines Steuergerätes handelt, ist dieses System auch nicht dazu geeignet, den Benutzer möglichst umfassend über fahrzeuginterne Vorgänge bzw. technische Details zu informieren und ihm die Durchführung möglicher Maßnahmen möglichst verständlich zu erläutern.

Der Erfindung liegt daher das technische Problem zugrunde, eine verbesserte Vorrichtung und ein verbessertes Verfahren zur interaktiven Informationsausgabe und/oder Hilfestellung für den Benutzer eines Kraftfahrzeugs zu schaffen.

Die Lösung des technischen Problems ergibt sich erfindungsgemäß durch die Gegenstände der Ansprüche 1 und 21. Weitere vorteilhafte Ausgestaltungen der Erfindung ergeben sich aus den Unteransprüchen.

Der Erfindung liegt dabei die Erkenntnis zugrunde, dass sich eine Verbesserung hinsichtlich der dargebotenen Hilfestellung und Attraktivität der Nutzung der ansonsten üblicherweise in einem Bordbuch enthaltenen Informationen mittels eines "situativen Multimedia-Handbuchs", erzielen lässt, welches auch vorzugsweise als "multimodaler virtueller Fahrzeugassistent" ausgebildet sein kann und dem Benutzer bei erkannten Problemen automatisch auf einer im Fahrzeug vorgesehenen Ausgabeeinheit die relevanten Informationen zur Lösung des Problems in didaktisch adäquater Weise zur Verfügung stellt und weiter vorzugsweise in der Lage ist, mit dem Benutzer in interaktiver Weise zu kommunizieren und auf ihn unmittelbar einzugehen. Dies wird erfindungsgemäß gelöst, indem eine Vorrichtung und ein Verfahren zur Informationsausgabe und/oder Hilfestellung für den Benutzer eines Kraftfahrzeugs vorgeschlagen wird, umfassend mindestens eine Ausgabeeinheit zur Ausgabe von Information, mindestens eine Erfassungseinheit zum Erfassen von Statusdaten bezüglich von Fahrzeugkomponenten und/oder Daten bezüglich einer Fahr- und/oder Fahrersituation, mindestens eine Auswerteeinheit zum Auswerten und Interpretieren der von der Erfassungseinheit erfassten Daten und mindestens eine Erklärungseinheit zum Auswählen und Bereitstellen von Information und/oder Hilfestellung für den Benutzer in Abhängigkeit der von der Auswerteeinheit ausgewerteten und interpretierten Daten, wobei zur Präsentation der ausgegebenen Information mindestens eine aus einer Mehrzahl von verfügbaren Arten der Informationsausgabe in Abhängigkeit der Fahrsituation und/oder des Benutzerwunsches auswählbar und einsetzbar ist und die Bereitstellung der Information selbsttätig in Abhängigkeit einer Fahrsituation und/oder eines vom Benutzer und/oder von der Erklärungseinheit festgelegten Zeitpunkts erfolgt. Auf diese Weise kann eine situative Information und Hilfestellung des Benutzers bei Problemen im Zusammenhang mit dem Fahrzeug automatisch erfolgen. Die ausgegebenen Informationen können dazu multimedial präsentiert und für den Benutzer in besonders ansprechender Weise aufbereitet und für eine leichte Verständlichkeit nach didaktischen und ergonomischen Gesichtspunkten optimiert werden. Unter "multimedial" ist dabei zu verstehen, dass für eine bestimmte Information nicht lediglich eine einzige Art der Darstellung bzw. Präsentation zur Verfügung steht, sondern eine Mehrzahl unterschiedlicher Darstellungs- bzw. Präsentationsarten, aus denen eine oder mehrere ausgewählt und alleine oder in Kombination zur Darstellung bzw. Präsentation der Information eingesetzt werden können. Dabei kann die Präsentation der Information bzw. ihrer Inhalte zum Beispiel rein akustisch erfolgen, wobei alle Inhalte dann lediglich sprachlich beschrieben werden. Es sind jedoch für die Ausgabe der Information auch alleine oder in Kombination mit einer akustischen Ausgabe diverse visuelle Darstellungsarten denkbar, beispielsweise als kombinierte Text- und Bilddarstellung und/oder als reine Darstellung von Texten und/oder mittels einer grafischen A-nimation. Die erfindungsgemäße Vorrichtung bzw. das erfindungsgemäße Verfahren kann dabei mittels der Erfassungseinheit auf zahlreiche Statusinformationen bzw. -daten beispielsweise über den Zustand von Fahrzeugkomponenten und/oder bezüglich einer Fahr- und/oder Fahrersituation zurückgreifen, die in den üblicherweise bekannten Fahrzeuguntersystemen ohnehin vorliegen und verarbeitet werden. Die Auswerteeinheit wertet diese Daten insbesondere im Hinblick auf einen potenziellen Informationsbedarf des Benutzers aus und interpretiert sie. Wird im Zuge der Auswertung ein kritischer Zustand erkannt, meldet sich das System selbsttätig vorzugsweise akustisch oder visuell, beschreibt das Problem und erklärt weiter vorzugsweise die nun nötigen Lösungsschritte. Die Erklärungseinheit kann hierzu die für den Benutzer relevanten Informationen auswählen und dem Benutzer dann beispielsweise die Wirkungsweise bestimmter Funktionen und die dazu notwendigen Bedienungsschritte vermitteln. Zwar üben die Erfassungseinheit, die Auswerteeinheit sowie die Erklärungseinheit jeweils einzelne voneinander getrennte Funktionen aus, es ist jedoch ebenso vorstellbar, dass diese Einheiten zusammengefasst und in einer einzigen Verarbeitungseinheit integriert sind. Die von der Erklärungseinheit ausgewählte Information und/oder Hilfestellung wird dabei als Push"-Information gehandhabt, d. h., die Erklärungseinheit agiert proaktiv und schaltet sich - allerdings unter Berücksichtigung der Fahr- und Fahrersituation - selbsttätig ein. Die Fähigkeit des Systems zu kontext-adaptiver Aktivität führt dazu, dass Informationen oder auch Warnungen nur in einem passenden und fahrtechnisch unkritischen Moment ausgegeben werden. So sind beispielsweise ausführliche Erklärungen zur Behebung eines Fehlers lediglich beim Stillstand des Fahrzeugs zugänglich, während andere, weniger komplexe Informationen auch während der Fahrt, vorzugsweise akustisch, präsentierbar sind. Unter dem "Benutzer" ist zwar vorzugsweise der Fahrer des Kraftfahrzeugs zu verstehen, es kann sich dabei jedoch auch um den Beifahrer oder um einen weiteren Insassen des Fahrzeugs handeln. Es ist sogar vorstellbar, dass das erfindungsgemäße System mehrere Benutzer innerhalb eines Fahrzeugs abwechselnd oder simultan berücksichtigt, um mit diesen jeweils individuell zu kommunizieren und zu interagieren.

Die mittels der erfindungsgemäßen Vorrichtung bzw. dem erfindungsgemäßen Verfahren durchführbare multimediale Informationsausgabe und/oder Hilfestellung kann beispielsweise auch Unfallsituationen betreffen. Dabei können zum Beispiel wichtige Informationen oder Handlungsanweisungen gegeben werden. Es ist auch vorstellbar, dass dabei beruhigend auf den Fahrer eingewirkt werden kann. In Situationen, in denen beispielsweise ein Fahrer als Helfer an einem Unfall agieren will, kann zum Beispiel zur Vorsicht gemahnt und an die wichtigsten Schritte zur ersten Hilfe erinnert werden. Durch die multimediale Informationsausgabe und/oder Hilfestellung wird jedoch vorzugsweise das übliche Bordbuch nicht ersetzt und damit obsolet, sondern lediglich ergänzt. Weiter vorzugsweise sind die von der erfindungsgemäßen Vorrichtung zur Verfügung gestellten Informationen sowie die Informationen des Bordbuchs miteinander "verzahnt", d.h., sie verweisen aufeinander. Dies kann beispielsweise hinsichtlich umfangreicher Sicherheitsinformationen der Fall sein, die aufgrund Ihres Umfangs und Ihres formalen Charakters lediglich im Bordbuch abgelegt sind, oder bezüglich ausschließlich in animierter Form verfügbarer multimedialer Präsentationen, die dann lediglich mittels der erfindungsgemäßen Vorrichtung ausgebbar sind und auf die dann das Bordbuch lediglich verweist. Somit bieten die erfindungsgemäße Vorrichtung und das erfindungsgemäße Verfahren gegenüber einem herkömmlichen Bordbuch den Vorteil, dass dem Benutzer Lösungsvorschläge zu Problemen im Fahrzeugumfeld von dem erfindungsgemäßen System proaktiv, situativ und - zumindest auf Wunsch - unmittelbar angeboten werden können. Des Weiteren ist eine bessere Verständlichkeit von Problemen und Funktionen durch anschauliche und zeitnahe Darstellung sowie eine bessere Akzeptanz und eine verbesserte Wahrnehmung der Fahrzeugdokumentation vonseiten des Benutzers durch einen aktiven, attraktiven und benutzerfreundlichen Zugang gewährleistet. Dies führt in der Praxis über längere Sicht dazu, dass aufgrund der verbesserten Kenntnis des Benutzers mehr der prinzipiell im Fahrzeug verfügbaren Funktionen auch tatsächlich genutzt werden.

Die erfindungsgemäße Vorrichtung und das erfindungsgemäße Verfahren sind so ausgestaltet, dass diese es einem Benutzer ermöglichen, auch über Fahrzeugfunktionen und Fahrzeugelemente und Fahrzeugsysteme Informationen zu erhalten, die nicht gerade proaktiv angeboten werden. In einem solchen Fall ist eine Benutzerauswahl der Fahrzeugfunktion, des Fahrzeugsystems oder des Fahrzeugelements notwendig, über die der Benutzer weitere Informationen wünscht, um die Fahrzeugfunktion kennen zu lernen und/oder eine Bedienung oder Handhabung zu erlernen. Erfindungsgemäß ist für diese Benutzerauswahl vorgesehen, dass die mindestens eine Ausgabeeinheit eine grafische Anzeige umfasst, die mit einer positionsempfindlichen Sensoreinheit gekoppelt ist, wobei auf der Anzeige mindestens eine Teilansicht des Kraftfahrzeugs grafisch darstellbar ist, und mittels der positionsempfindlichen Sensoreinheit ein Benutzerwunsch für eine Informationsausgabe über eine Fahrzeugfunktion, eine Fahrsituation und/oder ein Fahrzeugsystem erfassbar ist, wobei der Benutzerwunsch über ein Berühren und/oder Annähern an die grafische Darstellung des Fahrzeugsystems und/oder eines mit der Bedienung und/oder Ausführung der Fahrzeugfunktion oder Fahrsituation beteiligten Fahrzeugsystems oder Fahrzeugelements durch den Nutzer ausgedrückt ist. Ein Benutzerwunsch kann somit auf einfache Weise erfasst werden. Insbesondere ist keine vertiefte Kenntnis über den Namen einer Fahrzeugfunktion oder eines Fahrzeugelements oder eines Fahrzeugsystems notwendig. Eine grafische Auswahl ermöglicht und fördert eine intuitive Verwendung der Erfindung durch den Benutzer. Dem Benutzer wird zumindest ein Teil des Kraftfahrzeugs grafisch dargestellt. Der Benutzer kann nun ein Fahrzeugsystem oder eine Fahrzeugfunktion im engeren Sinne über eine Berührung der Darstellung des Fahrzeugsystems oder eines bei der Ausführung und/oder Bedienung der Fahrzeugfunktion verwendeten anderen Fahrzeugsystems oder Fahrzeugelements auswählen.

Um einem Benutzer zu signalisieren, über welche Fahrzeugfunktionen, Fahrzeugsysteme, Fahrzeugelemente, Fahrsituationen usw. ausgebbare Informationen vorliegen, sind erfindungsgemäß die Fahrzeugsysteme und/oder -elemente und/oder Gruppen hiervon, über die ausgebbar Informationen vorliegen, und die Fahrzeugsysteme und/oder Elemente und/oder Gruppen hiervon, mit denen Fahrzeugfunktionen oder Fahrsituationen ausführbar oder bedienbar sind, über die ausgebbare Informationen vorliegen, in der mindestens einen Teilansicht grafisch, insbesondere farblich, hervorhebbar. Die einzelnen Fahrzeugfunktionen und Fahrsituationen usw. werden über die Bedienelemente, Fahrzeugsysteme oder anderen Fahrzeugelemente grafisch hervorgehoben dargestellt, so dass der Benutzer diese einfach auswählen kann.

In einer vorteilhaften Ausführungsform ist zur Informationsausgabe ein mittels der Ausgabeeinheit erzeugbarer anthropomorpher virtueller Charakter vorgesehen. Dies kann beispielsweise ein sog. "Avatar" sein, d.h. ein virtueller Charakter in Form einer animierten Figur, welcher beispielsweise die dem Benutzer zu vermittelnden Informationen und Inhalte präsentiert und detaillierte Funktionsabläufe demonstriert und erläutert. So ist beispielsweise vorstellbar, dass der Avatar eingesetzt wird, um den Benutzer bei der Bedienung des Systems zu unterstützen, ihm interaktive Hilfestellung und/oder zusätzliche Erklärungen anzubieten und die Ausgabe der Information und/oder Hilfestellung in ansprechender Weise zu umrahmen bzw. zu präsentieren. Dies erhöht die Benutzerfreundlichkeit und verstärkt die Affinität des Benutzers zum System, wodurch dem Benutzer ein zunehmend intuitiver Umgang mit der Informations- und Bedienvorrichtung ermöglicht wird.

In einer weiteren vorteilhaften Ausführungsform ist mindestens ein Kamerasystem zur Erfassung des Verhaltens des Benutzers vorgesehen und die Bereitstellung der Information erfolgt zusätzlich in Abhängigkeit des von dem Kamerasystem erfassten Verhaltens des Benutzers. Mittels mindestens einer Kamera erfolgt dabei eine Beobachtung der momentanen Situation, in der sich der Benutzer befindet, sowie dessen Verhalten, wobei das von der Kamera erfasste Verhalten des Benutzers dann von der Auswerteeinheit interpretiert werden kann und die Erklärungseinheit dann darauf automatisch in angemessener Weise durch Bereitstellung von Informationen und/oder Hilfestellung reagiert bzw. mit dem Benutzer interagiert. Dabei können beispielsweise Mimik, Gestik und Bewegungen des Benutzers erfasst und interpretiert werden, um hinsichtlich der Art der bereitzustellenden Information und/oder Hilfestellung auf die momentane emotionale Situation des Benutzers angemessen eingehen zu können. Dies erhöht die Interaktionsfähigkeit des Systems mit dem Benutzer. Dadurch wird ebenfalls die Benutzerfreundlichkeit und die Affinität des Benutzers zum System verstärkt und ermöglicht einen intuitiven Umgang des Benutzers mit der Informations- und Bedienvorrichtung. Das Kamerasystem kann dabei entweder mit der Auswerteeinheit oder direkt mit der Erklärungseinheit verbunden sein. In letzterem Fall kann die Erklärungseinheit beispielsweise eine eigene Kameraauswerteeinheit aufweisen, um Daten des Kamerasystems auszuwerten und zu interpretieren. Alternativ könnte die Kameraauswerteeinheit aber auch als integrierter Bestandteil der Auswerteeinheit ausgebildet sein.

In einer weiteren vorteilhaften Ausführungsform ist durch das Kamerasystem die Blickrichtung des Benutzers erfassbar und die Bereitstellung der Information erfolgt in Abhängigkeit der Blickrichtung des Benutzers. Dies kann beispielsweise dazu dienen, eine fortschreitende Ermüdung des Benutzers zu detektieren und automatisch angemessene Maßnahmen, beispielsweise das Auslösen einer Alarmfunktion oder Abbrems- und/oder Lenkeingriffe, einzuleiten. Wird ein anthropomorpher virtueller Charakter zur Präsentation eingesetzt, kann dieser anhand der erfassten Blickrichtung des Benutzers dieser mit seinem eigenen Blick folgen, somit den Benutzer anschauen und besser auf diesen bzw. dessen Verhalten unmittelbar eingehen. Abhängig von der ermittelten Blickrichtung - vorzugsweise auch in Kombination mit der ebenfalls erfassten Mimik und Gestik des Benutzers - kann er dadurch auch die Fähigkeit besitzen, bestimmte Bedürfnisse des Benutzers zu erkennen und daraufhin bestimmte Handlungen des Benutzers vorwegzunehmen und/oder vorzubereiten, beispielsweise Menüeinstellungen vornehmen, Telefonverbindung herstellen, Autoradio bzw. Navigationssystem einschalten, Klimaanlage aus- bzw. einschalten, etc., und mit dem Benutzer diesbezüglich automatisch in Kommunikation zu treten. Dies erhöht wiederum die Interaktionsfähigkeit des Systems mit dem Benutzer und somit die Benutzerfreundlichkeit, verstärkt die Affinität des Benutzers zum System und ermöglicht einen noch intuitiveren Umgang des Benutzers mit der Informations- und Bedienvorrichtung.

In einer weiteren vorteilhaften Ausführungsform ist anhand der mittels der Ausgabeeinheit präsentierten Information eine interaktive Anleitung des Benutzers zur Beherrschung von Fahrzeugfunktionen und/oder Fahrsituationen durchführbar. Dies bietet den Vorteil, dass das System zwar abhängig von Fahrsituation und Voreinstellung des Systems selbsttätig eine Auswahl zur Bereitstellung von Information und/oder Hilfestellungen trifft und entsprechende Vorschläge macht, der Benutzer im Zuge der Bereitstellung der Information dann aber selbst auf die Art und Weise der Präsentation sowie insbesondere die Informationstiefe sowie die weiteren durchzuführenden Maßnahmen einwirken kann, so dass ihm lediglich diejenigen Informationen und/oder Hilfestellungen präsentiert werden, die für ihn zu diesem Zeitpunkt tatsächlich relevant sind. Dies kann durch manuelle interaktive Einrichtungen, beispielsweise in Form einer menügesteuerten Bedienung mittels einer Eingabeeinheit, erfolgen. Vorzugsweise handelt es sich dabei um Bedienknöpfe und/oder um eine grafische Benutzeroberfläche, z.B. im Rahmen eines Displays, Bildschirms oder Touchscreens, und/oder eine Multifunktions-Anzeige mit Eingabemöglichkeit. Dies kann jedoch beispielsweise auch über eine vorzugsweise vorhandene Einrichtung zur Spracherkennung erfolgen, da diese eine für den Benutzer besonders komfortable und bequeme Bedienbarkeit mit sich bringt. Der Begriff Fahrzeugfunktionen ist in diesem Zusammenhang in einem weiteren Sinne zu verstehen. Dieses bedeutet, dass auch Erläuterungen und Hilfestellungen über Fahrzeugsysteme und Fahrzeugelemente mit von der Aussage "Anleitung des Benutzers zur Beherrschung von Fahrzeugfunktionen" umfasst sein sollen. Das Verfahren und die Vorrichtung zur Informationsausgabe und/oder Hilfestellung können somit ein Erlernen einer Handhabung und Bedienung der unterschiedlichen Fahrzeugsysteme und Fahrzeugelemente unterstützen. Auch wenn im Folgenden zum Teil die Begriffe Fahrzeugfunktion und Fahrzeugsystem beide in einem Zusammenhang benutzt werden, so geschieht dieses nur, um hervorzuheben, dass auch Fahrzeugsysteme und Fahrzeugelemente als von dem Begriff Fahrzeugfunktion im Hinblick auf das Bereitstellen von ausgebbaren Informationen umfasst angesehen werden.

Besonders einfach ist eine solche intuitive Benutzerauswahl mit einer Ausführungsform zu realisieren, bei der die grafische Anzeige mit der positionsempfindlichen Sensoreinheit als Touchscreen ausgebildet ist. Eine positionsempfindliche Sensoreinheit kann alternativ oder zusätzlich auch eine berührungslos wirkende, eine dreidimensionale Position eines Betätigungselements, beispielsweise eines Fingers, erfassende Sensoreinheit sein. Solche Sensoreinheiten sind beispielsweise in der WO 2004/078536 beschrieben.

Um die grafische Darstellung übersichtlich zuhalten und dennoch auf diese Weise eine Auswahlmöglichkeit für sehr viele Fahrzeugfunktionen und Fahrzeugsysteme und/oder -elemente zu bieten, wird in der Regel nur ein Teil des Kraftfahrzeugs zu einem Zeitpunkt dargestellt. Beispielsweise kann eine Ansicht des Cockpits des Kraftfahrzeugs auf der Anzeigevorrichtung dargestellt werden. Um jedoch auch eine Informationsausgabe über Fahrzeugfunktionen sowie Fahrzeugsysteme und Fahrzeugelemente für den Benutzer auf die soeben beschriebene einfache Weise auswählbar zu machen, ist bei einer Ausführungsform der Erfindung vorzugsweise vorgesehen, dass die Teilansicht grafische Elemente umfasst, um eine Darstellung anderer Teilansichten über eine Berührung oder Annäherung an diese grafischen Elemente auszulösen. So können andere Fahrzeugfunktionen und Fahrzeugsysteme und Fahrzeugelemente in anderen Ansichten ausgewählt werden. Angemerkt sei, dass eine Fahrzeugfunktion eventuell in mehreren Ansichten anwählbar ist, da sie beispielsweise über eine Vielzahl von Bedienelementen bedienbar ist oder eine Reihe von Fahrzeugsystemen bei der Ausführung nutzt.

Eine Positionsauflösung der Sensoreinheit, insbesondere wenn diese mit der Anzeige in einen Touchscreen integriert ist, reicht in der Regel nicht aus, um dicht benachbart zueinander beispielsweise im Cockpit oder sogar auf dem Lenkrad angeordnete Bedienelemente selektiv mit einem Finger seitens des Benutzers auf der Anzeigefläche der Anzeigevorrichtung auszuwählen, um die unterschiedlichen (mit den Bedienelementen verknüpften) Fahrzeugfunktionen auszuwählen, über die ausgebbare Informationen gewünscht werden. Eine Abhilfe erreicht man dadurch, dass einzelne Fahrzeugfunktionen usw. zu Gruppen zusammengefasst werden. Um dennoch eine individuelle Auswahl grafisch zu ermöglichen, ist bei einer Ausführungsform der Erfindung die mindestens eine grafische Ansicht ein Bestandteil eines grafischen, insbesondere hierarchischen Menüsystems zum Erfassen des Benutzerwunsches für die ausgebbare Information. Beispielsweise können in einer Cockpitgesamtansicht alle Fahrzeugfunktionen, die mit dem Lenkrad oder daran angeordneten Fahrzeugelementen verknüpft sind, zu einer Gruppe zusammengefasst sein. Bei einer Berührung der Anzeigefläche in Bereich des Lenkrads wird dann eine Ansicht gezeigt, auf der das Lenkrad und dessen Umgebung vergrößert dargestellt sind. So kann eine Vielzahl von Menüebenen aufgebaut sein.

Häufig wünscht ein Benutzer, der sich Informationen über eine erste Fahrzeugfunktion ausgeben lässt, anschließend ausgebbare Informationen über eine "verwandte" Fahrzeugfunktion. Mittels Analysen eines Nutzerverhaltens können diese verwandten Fahrzeugfunktionen ermittelt werden. Diese sind den einzelnen Fahrzeugfunktionen, Fahrzeugsystemen usw. fest oder interaktiv zugeordnet. Eine interaktive Zuordnung ermöglicht es, die Zuordnung in Abhängigkeit der bereits angebotenen und/oder ausgewählten Hilfen, d.h. ausgebbaren Informationen, auszuführen. Um diese verwandten Fahrzeugfunktionen vereinfacht auswählen zu können, ist bei einer Ausführungsform der Erfindung vorgesehen, dass eine Art der Informationsausgabe eine grafische Darstellung zumindest eines Teils der ausgebbaren Informationen umfasst, wobei die grafische Darstellung zusätzlich Elemente, die vorzugsweise alphanumerische Informationen umfassen, zum Erfassen eines Benutzerwunsches für eine Informationsausgabe von mit dem zumindest einen Teil der ausgebbaren Informationen in Zusammenhang stehenden weiteren ausgebbaren Informationen und/oder für eine Menünavigation umfasst. Der Benutzer kann somit ausgewählte weitere ausgebbare Informationen oder eine Menünavigation auf einfache Weise auswählen. Ein grafisches Element zur Auswahl einer Menünavigation wird vorzugsweise als Rücksprungknopf ausgestaltet sein, dessen Auswahl in ein grafisches Menü, d.h. eine Ansicht, führt, in der die vorangehende Auswahl ausgeführt wurde. In Situationen in denen die ausgebbare Information proaktiv, ohne eine explizite Benutzerauswahl ausgewählt wurde, wird über den Rücksprungknopf vorzugsweise ein grafisches Menü aufgerufen, in dem diese ausgebbare Information auswählbar ist. Ein grafisches Menü wird hier als eine grafische Darstellung einer Ansicht zumindest eines Teils des Kraftfahrzeugs angesehen, wobei einige alphanumerische Bedienelemente in eine solche Ansicht integriert sein können.

Bei einer bevorzugten Ausführungsform ist vorgesehen, dass ein Informationsmodus vorgesehen ist, in dem eine interaktive Handhabung oder Betätigung eines realen Fahrzeugsystems oder einer realen Fahrzeugfunktion als Benutzerwunsch für eine Informationsausgabe über das entsprechende Fahrzeugsystem oder die entsprechende Fahrzeugfunktion interpretierbar ist. So kann ein Fahrer im Informationsmodus sich während einer Betätigung von Bedienelementen beispielsweise Erläuterungen ausgeben lassen, die ihm die mit der Betätigung ausgelöste Funktion erklären oder weitere Anweisungen geben, wie mit der Bedienung fortzufahren ist.

In einer weiteren vorteilhaften Ausführungsform sind die Arten der Informationsausgabe zumindest teilweise individuell konfigurierbar. Dabei können sowohl die prinzipielle Art der Ausgabe der Information als auch deren jeweilige Parameter benutzerspezifisch konfigurierbar sein. Es ist zum Beispiel vorstellbar, dass die Ausgabe unter Anwendung von Multimedia-Komponenten, beispielsweise Sprachausgabe, Text, grafischen Bildelementen und/oder Animationen, erfolgt. Die konkrete Darstellungs- bzw. Ausgabeform kann dabei vorzugsweise - auch im Hinblick auf bestimmte unterschiedliche Fahr- bzw. Fahrersituationen - vom Benutzer ausgewählt und seinen spezifischen Bedürfnissen und Wünschen angepasst werden oder aber vorab werkseitig eingestellt sein.

In einer weiteren vorteilhaften Ausführungsform sind die Arten der Informationsausgabe durch zusätzliche Präsentätionsmittel ergänzbar und individualisierbar. Es ist dabei z.B. vorstellbar, dass der vorzugsweise vorgesehene anthropomorphe virtuelle Charakter durch den Benutzer nach dessen persönlichen Vorstellungen individuell konfiguriert und seinem Geschmack angepasst werden kann, beispielsweise hinsichtlich verwendeter Grafik- bzw. Animationselemente (virtuelle Figuren sowie deren Aussehen, Erscheinung, Gesicht, etc.) sowie Klangelementen (z.B. Stimme, Warntöne, Hintergrundgeräusche, Musik, etc.), Hintergrundbild, allgemeiner Farbgestaltung, o. Ä. Auch dies erhöht die Affinität des Benutzers zum System und verstärkt dessen Akzeptanz beim Benutzer. Die zusätzlichen Präsentationsmittel erhöhen dabei außerdem das Verständnis des Benutzers hinsichtlich der präsentierten Information und verbessern seine Fähigkeiten, die verschiedenen Fahrzeugfunktionen bedienen und mit diesen interagieren zu können. Es ist des Weiteren auch vorstellbar, dass die zusätzlichen Präsentationsmittel durch Abruf von mindestens einer zentralen Datenbank bedarfsweise durch den Benutzer individuell zusammenstellbar und/oder veränderbar sind. Somit kann eine enorme Bandbreite an Variations- und Gestaltungsmöglichkeiten hinsichtlich der Präsentationsmittel gewährleistet werden, ohne dabei zusätzliche lokale Systemressourcen im Fahrzeug zu beanspruchen, wobei dennoch ohne wesentlichen Aufwand in einfacher Weise zu jeder Zeit und unabhängig vom Standort Anpassungen an die persönlichen Wünsche und Vorstellungen des Benutzers in großer Variantenvielfalt vorgenommen werden können. Es ist des Weiteren vorstellbar, dass auf diese Weise auch die in einer fahrzeuginternen Speicher- und/oder Recheneinheit abgelegten Daten, die den bereitzustellenden Informationen bzw. Hilfestellungen zugrunde liegen, auf den aktuellsten Stand gebracht werden können, beispielsweise durch "Herunterladen" aktueller Gebrauchsanweisungen, Benutzerhandbücher, Software oder sonstiger Aktualisierungen.

In einer weiteren vorteilhaften Ausführungsform weist die Vorrichtung eine Lernfunktion auf, bei der für einen Benutzer durch aktives Befolgen von mittels der Erklärungseinheit bereitgestellten Anweisungen das Bedienen mindestens einer Fahrzeugfunktion erlernbar ist, wobei der Fahrer in Abhängigkeit der von ihm durchgeführten Handlungen von der Erklärungseinheit mindestens eine positive oder negative Rückmeldung erhält. Dabei kann die Lernfunktion beispielsweise in Form mindestens eines eigenständigen Unterprogramms in einer Speichereinheit der erfindungsgemäßen Vorrichtung vorliegen und bei Bedarf abgerufen und gestartet werden. Vorzugsweise dient dabei jeweils eine interaktive Lemeinheit, ein sog. "Tutorial", dem Erlernen einer bestimmten Fahrzeugfunktion. Die Lerneinheiten können dabei entweder jeweils als eigene Unterprogramme ausgebildet sein oder aber in einem gemeinsamen Unterprogramm zusammengefasst sein. Die Lerneinheiten vermitteln dem Benutzer Prinzip und Wirkungsweise bestimmter Fahrzeugfunktionen (z.B. Einstellung eines Navigationsziels, Speichern eines Radiosenders, Lösen der Handbremse, etc.) und die dazu notwendigen Bedienschritte. Die Lemeinheiten sind interaktiv, d.h., sie erfordern die Aktivität des Benutzers. Der Benutzer erlernt die Bedienung der Fahrzeugfunktionen durch reale Interaktion mit dem Fahrzeug, d.h., zum Erlernen einer Fahrzeugfunktion muss der Benutzer die zu erlernende Aktion unmittelbar während des Tutorials durchführen. Durch eine Vernetzung mit den weiteren Fahrzeugsystemen empfängt die erfindungsgemäße Vorrichtung die von der Benutzeraktion ausgelösten Daten und kann dem Benutzer dann unmittelbar positives oder - bei Fehlbedienung - negatives Feedback geben. Durch das unmittelbare Verfolgen der Benutzeraktionen durch die erfindungsgemäße Vorrichtung und die dementsprechende Rückmeldung an den Benutzer kann der Lemerfolg deutlich und nachhaltig verbessert werden. Aus Sicherheitsgründen lässt sich die Lernfunktion dabei jedoch vorzugsweise nicht während der Fahrt vom Fahrer aufrufen.

Vorteilhafterweise ist bei einer Ausführungsform vorgesehen, dass die mittels der Ausgabeeinheit präsentierte Information, insbesondere die mittels der Erklärungseinheit bereitgestellten Anweisungen, der interaktiven Anleitung des Benutzers zur Beherrschung von Fahrzeugfunktionen und/oder Fahrsituationen abhängig von einer realen Interaktion des Benutzers mit dem Fahrzeug, insbesondere den realen Fahrzeugsystemen und Fahrzeugfunktionen, ist bzw. ausgegeben wird. So wird bei einer Anleitung zum Erlernen des Beherrschens eines Fahrzeugsystems beispielsweise die ausgegebene Information dadurch beeinflusst, dass eine informationsausgabe, die unterschiedliche Optionen angibt, abbricht, sobald eine der möglichen Optionen über eine interaktive Betätigungshandlung des Benutzers ausgewählt ist. Ebenso wird die anschließend ausgegebene Information durch die zuvor erfolgte oder erfolgten Betätigungshandlungen beeinflusst. Es werden beispielsweise nur noch die Anweisungen ausgegeben, die für eine sinnvolle weitere Bedienung des Fahrzeugsystems vorgesehen sind. Hierdurch wird beispielsweise einem Fahrer die Möglichkeit eröffnet, sich während der Fahrt die Bedienung einzelne Fahrzeugsysteme oder Fahrzeugfunktionen erläutern zu lassen und sich bei der Bedienung unterstützen zu lassen. Hierdurch wird eine schnellere und fehlerfreiere Bedienung der Fahrzeugsysteme und Fahrzeugfunktionen unterstützt.

In einer weiteren vorteilhaften Ausführungsform ist die Ausgabeeinheit zumindest als Bestandteil eines Multifunktionsbedienelements und/oder eines Navigationssystems ausgebildet. Auf diese Weise kann die erfindungsgemäße Vorrichtung in Platz und Ressourcen sparender Weise zumindest teilweise in bereits bekannte Fahrzeugsysteme integriert werden, wodurch zudem Kosten sowie Herstellungs- und Montageaufwand reduziert werden. So ist beispielsweise die Nutzung eines gemeinsamen Displays bzw. Bildschirms sowie einer zugehörigen Eingabevorrichtung vorstellbar.

In einer weiteren vorteilhaften Ausführungsform ist durch den Benutzer bedarfsweise mittels einer Eingabevorrichtung mindestens ein Marker setzbar, wodurch die Ausgabe von mittels der Erklärungseinheit zu einem aktuellen Zeitpunkt bereits ausgewählter und bereitstellbarer Information auf einen späteren Zeitpunkt verschiebbar ist. So lassen sich bestimmte Präsentationsformen bzw. Funktionen der erfindungsgemäßen Vorrichtung, wie beispielsweise animierte, von einem virtuellen Charakter präsentierte Inhalte oder die Lernfunktion mittels verschiedener "Tutorials", aus Sicherheitsgründen vom Fahrer vorzugsweise nicht während der Fahrt aufrufen. Der Fahrer kann jedoch, sobald während der Fahrt eine Informationsausgabe anliegt und vom System entsprechend angekündigt wird, einen Marker setzen. Vorzugsweise wird dann beim Stillstand des Fahrzeugs bzw. nach Abschalten des Motors automatisch die mittels des Markers gekennzeichnete Information, z.B. ein Tutorial zu einem gemerkten Thema, gestartet. Die Darbietung der Information kann jedoch vom Fahrer auch auf einen beliebigen späteren Zeitpunkt, z.B. mittels einer einfachen menügeführten Abfrage, verschoben werden.

In einer weiteren vorteilhaften Ausführungsform ist die Eingabevorrichtung als Einrichtung zur Spracherkennung ausgebildet. Auf diese Weise kann eine Interaktion des Fahrers mit der erfindungsgemäßen Vorrichtung während der Fahrt, beispielsweise das Setzen eines Markers oder die Bedienung von interaktiven Menüfunktionen, aber auch die Kommunikation mit dem vorzugsweise vorgesehenen anthropomorphen virtuellen Charakter, mittels Spracheingabe erfolgen, um eine Gefährdung durch Ablenkung des Fahrers möglichst gering zu halten. Die Vorrichtung zur Spracherkennung ist dabei vorzugsweise zusätzlich zu weiteren manuellen interaktiven Einrichtungen wie beispielsweise Bedienknöpfen oder einem Touchscreen vorgesehen.

In einer weiteren Vorteilhaften Ausführungsform ist mittels der Einrichtung zur Spracherkennung mindestens eine Stimmkenngröße des Benutzers erfassbar. Die Stimmkenngröße kann dabei beispielsweise Lautstärke, Tonfall, Tonhöhe, etc. der Stimme sein. Auf diese Weise können neben den üblichen Sprachbefehlen auch Emotionen des Benutzers, wie z.B. Aufgeregtheit, Nervosität, Traurigkeit, Müdigkeit, etc. anhand der Auswerteeinheit detektiert werden, um darauf in Abhängigkeit der Stimmkenngröße bei der Bereitstellung der Informationen bzw. Hilfestellungen angemessen einzugehen. Es ist jedoch auch vorstellbar, dass die Fähigkeit zur Detektion und Interpretation von Stimmkenngrößen auch zur Identifizierung des Benutzers eingesetzt werden kann, um einerseits die Inbetriebnahme des Fahrzeugs bzw. bestimmter Funktionen zu ermöglichen und/oder andererseits ggf. gespeicherte individuelle Benutzerkonfigurationen einzustellen.

Die Erfindung wird nachfolgend anhand eines bevorzugten Ausführungsbeispiels näher erläutert. In den zugehörigen Figuren zeigen:
- Fig. 1: eine schematische Darstellung einer bevorzugten Ausführungsform einer erfindungsgemäßen Vorrichtung als Blockschaltbild,
- Fig. 2: eine schematische Darstellung einer vorteilhaften Ausführungsform der Ausgabeeinheit einer erfindungsgemäßen Vorrichtung;
- Fig. 3: eine schematische Darstellung einer weiteren vorteilhaften Ausführungsform einer erfindungsgemäßen Vorrichtung als Blockschaltbilds;
- Fig. 4: eine Ansicht einer interaktiven Benutzerschnittstelle;
- Fig. 5: eine weitere Ansicht einer interaktiven Benutzerschnittstelle;
- Fig. 6: eine Ansicht einer grafischen einer interaktiven Benutzerschnittstelle mit einem Avatar; und
- Fig. 7a bis 7g: Ansichten einer Informationsausgabe zur Erklärung einer Geschwindigkeitsregelanlage; und
- Fig. 8: eine weitere bevorzugte Ausführungsform einer Ansicht eines grafischen Teils der Informationsausgabe.

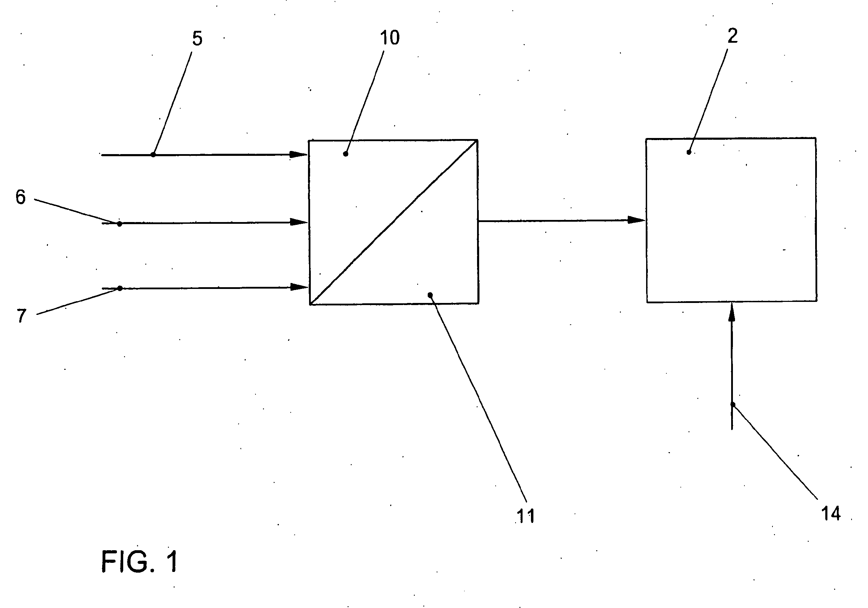

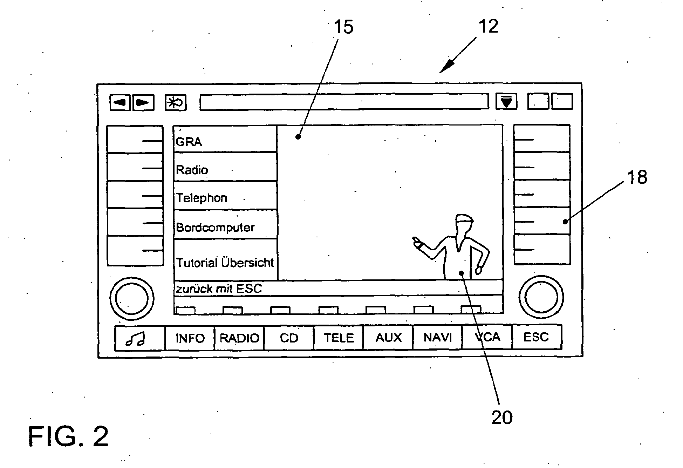

Fig. 1 zeigt schematisch ein Blockschaltbild einer bevorzugten Ausführungsform einer erfindungsgemäßen Vorrichtung zur Informationsausgabe und/oder Hilfestellung für den Benutzer eines Kraftfahrzeugs. Diese umfasst eine Ausgabeeinheit 2 zur Ausgabe von Information. Des Weiteren umfasst sie eine Erfassungseinheit, die zum Erfassen von Statusdaten bezüglich von Fahrzeugkomponenten 5 sowie Daten bezüglich einer Fahrsituation 6 und/oder Daten bezüglich einer Fahrersituation 7 geeignet ist. Die Erfassungseinheit ist integrativer Bestandteil einer Auswerteeinheit 10 zum Auswerten und Interpretieren der von der Erfassungseinheit erfassten Daten 5, 6, 7. Die Statusdaten bezüglich Fahrzeugkomponenten 5 können dabei entweder von Sensoren (nicht dargestellt) stammen, die den aktuellen Zustand der betreffenden Fahrzeugkomponenten erfassen, z.B. Öldruck, -stand und/oder-temperatur bzw. Reifendruck, Zustand der Bremsbeläge, etc. Sie können jedoch auch von einer oder mehreren weiteren Datenverarbeitungseinheiten, z.B. einem Bordrechner, Steuergeräten oder einem Bussystem (nicht dargestellt) stammen, die den Zustand der Fahrzeugkomponenten auf der Basis von Sensordaten bereits vorangehend erfasst haben. Die Daten bezüglich einer Fahrsituation können ebenfalls von Sensoren oder vorgeschalteten Datenverarbeitungseinheiten stammen, z.B. einem System zur aktiven Regelung der Fahrzeugstabilität, einem elektromechanischen Lenksystem, einem Navigationssystem, etc. Sie beschreiben vorzugsweise Zustände, in denen sich das Fahrzeug während seines Betriebes befindet, beispielsweise einem Brems- bzw. Lenkzustand während der Fahrt sowie der Erfassung des Bewegungszustands, d.h. ob sich das Fahrzeug bewegt oder im Stillstand befindet. Die Daten bezüglich einer Fahrersituation können ebenfalls von Sensoren oder vorgeschalteten Datenverarbeitungseinheiten stammen, z.B. einem Lenkradsensor, einer Kamera zur Erfassung des Ermüdungszustandes des Fahrers, etc. Sie beschreiben vorzugsweise Zustände, in denen sich der Fahrer während des Betriebs des Fahrzeugs befindet. Die erfindungsgemäße Vorrichtung kann somit mittels der Erfassungseinheit auf zahlreiche Statusinformationen bzw. -daten beispielsweise über den Zustand von Fahrzeugkomponenten und/oder bezüglich einer Fahr- und/oder Fahrersituation zurückgreifen, die in den üblicherweise bekannten Fahrzeugsystemen ohnehin vorliegen und verarbeitet werden. Die Auswerteeinheit 10 wertet diese Daten insbesondere im Hinblick auf einen potenziellen Informationsbedarf des Benutzers aus und interpretiert sie. Die erfindungsgemäße Vorrichtung weist des Weiteren eine Erklärungseinheit 11 zum Auswählen und Bereitstellen von Information und/oder Hilfestellung für den Benutzer in Abhängigkeit der von der Auswerteeinheit 10 ausgewerteten und interpretierten Daten auf. Auswerteeinheit 10 und Erklärungseinheit 11 sind dabei vorzugsweise zu einer gemeinsamen Recheneinheit zusammengefasst. Zur Präsentation der ausgegebenen Information wird dabei von der Erklärungseinheit 11 eine aus einer Mehrzahl von verfügbaren Arten der Informationsausgabe in Abhängigkeit der Fahrsituation und/oder des Fahrerwunsches ausgewählt und eingesetzt. Dabei kann die Präsentation der Information bzw. ihrer Inhalte multimedial, d.h. zum Beispiel akustisch erfolgen, wobei alle Inhalte dann lediglich sprachlich beschrieben werden, oder visuell, d.h. in Text- und/oder Bildform, grafisch, in animierter Form oder als beliebige Kombination dieser Ausgabearten. Es ist auch vorstellbar, dass zumindest Teilinformationen, z.B. Rückmeldungen an den Fahrer, haptisch (z.B. mittels Vibration) ausgegeben werden. Im vorliegenden Fall der Fig. 1 wird von einem sich bewegenden Fahrzeug ausgegangen. Wird von der Auswerteeinheit 10 ermittelt, dass das Fahrzeug sich bewegt, so veranlasst sie die Erklärungseinheit 11 vorzugsweise, die Informationen lediglich rein akustisch auszugeben, um den Fahrer nicht unverhältnismäßig beim Steuern des Fahrzeugs abzulenken. Die Bereitstellung der Information erfolgt dabei selbsttätig in Abhängigkeit der Fahrsituation und/oder eines vom Fahrer und/oder von der Erklärungseinheit 11 festgelegten Zeitpunkts. Wird im Zuge der Auswertung der Statusdaten bezüglich Fahrzeugkomponenten 5 oder der Daten bezüglich einer Fahr- bzw. Fahrersituation 6, 7 ein kritischer Zustand erkannt, meldet sich das System selbsttätig, im Falle des sich bewegenden Fahrzeugs vorzugsweise akustisch, beschreibt das Problem und erklärt weiter vorzugsweise, sofern der Benutzer dies wünscht, die nun nötigen Lösungsschritte. Die Erklärungseinheit 11 wählt hierzu die für den Benutzer relevanten Informationen aus und vermittelt dem Benutzer dann beispielsweise die Wirkungsweise bestimmter Funktionen und die dazu notwendigen Bedienungsschritte. Die von der Erklärungseinheit 11 ausgewählte Information und/oder Hilfestellung wird also als "Push"-Information gehandhabt, d. h., die Erklärungseinheit 11 agiert proaktiv und schaltet sich unter Berücksichtigung der Fahr- und Fahrersituation selbsttätig ein. Die Fähigkeit des Systems zu erkennen, ob und in welcher Form die Ausgabe einer Information angebracht und angemessen ist, wird als kontextadaptive Aktivität bezeichnet, d.h., Informationen oder auch Warnungen werden nur in einem passenden und fahrtechnisch unkritischen Moment ausgegeben. Vorzugsweise ist die Ausgabeeinheit 2 als interaktive Benutzerschnittstelle 12 (s. Fig. 2) ausgebildet, d.h., sie weist auch eine Eingabevorrichtung auf, mittels derer der Benutzer eine Dateneingabe 14 vornehmen kann.

Fig. 2 zeigt schematisch eine vorteilhafte Ausführungsform zumindest eines wesentlichen Bestandteils einer Ausgabeeinheit 2 einer erfindungsgemäßen Vorrichtung. Der dargestellte Bestandteil der Ausgabeeinheit 2 ist dabei eine interaktive Benutzerschnittstelle 12, welche als Multifunktions-Anzeige mit Eingabemöglichkeit ausgebildet ist und zumindest ein Display 15 sowie Tasten 18 aufweist. Anhand der mittels der interaktiven Benutzerschnittstelle 12 präsentierten Information ist z.B. eine interaktive Anleitung des Benutzers zur Beherrschung von Fahrzeugfunktionen und/oder Fahrsituationen durchführbar, beispielsweise in Form einer menügesteuerten Bedienung über die interaktive Benutzerschnittstelle 12. Für die Ausgabe der Information über die interaktive Benutzerschnittstelle 12 kann somit insbesondere auf visuelle Darstellungsarten, alleine oder in Kombination mit einer akustischen Informationsausgabe, zurückgegriffen werden, beispielsweise als kombinierte Text- und Bilddarstellung und/oder als reine Darstellung von Texten und/oder mittels eines Avatars 20, d.h. einem virtuellen Charakter in Form einer animierten Figur, welche die Inhalte präsentiert und detaillierte Funktionsabläufe demonstriert und erläutert. Der Avatar 20 kann den Benutzer bei der Bedienung des Systems unterstützen, ihm interaktive Hilfestellung und/oder zusätzliche Erklärungen anbieten und die Ausgabe der Information und/oder Hilfestellung in ansprechender Weise umrahmen bzw. präsentieren. Der Avatar 20 kann durch den Benutzer nach dessen persönlichen Vorstellungen individuell konfiguriert und seinem Geschmack angepasst werden, beispielsweise hinsichtlich verwendeter Grafik- bzw. Animationselemente (Typ der virtuellen Figur sowie deren Aussehen, Erscheinung, Gesicht, etc.) sowie Klangelementen (z.B. Stimme, Warntöne, Hintergrundgeräusche, Musik, etc.), Hintergrundbild, allgemeiner Farbgestaltung, o. Ä. Sowohl die Konfiguration des Avatars 20 als auch die sonstigen multimedialen Präsentationsmittel (z.B. die für die akustische Informationsausgabe verwendete Stimme, Klanguntermalung, Signaltöne sowie grafische Elemente, Symbole, etc.) sind durch Abruf von einer zentralen Datenbank mittels Datenfernübertragung bedarfsweise durch den Benutzer individuell zusammenstellbar und/oder veränderbar. Da die visuelle Darstellung detaillierter Informationen, insbesondere bei der Durchführung von interaktiven Abfragevorgängen oder Tutorials zum Erlernen von Fahrzeugfunktionen die Aufmerksamkeit des Benutzers in hohem Maße beansprucht, werden die in Fig. 2 beispielhaft dargestellten mittels der interaktiven Benutzerschnittstelle 12 anzeigbaren visuellen Arten der Informationsdarstellung vorzugsweise nur beim Stillstand des Fahrzeugs ausgegeben.

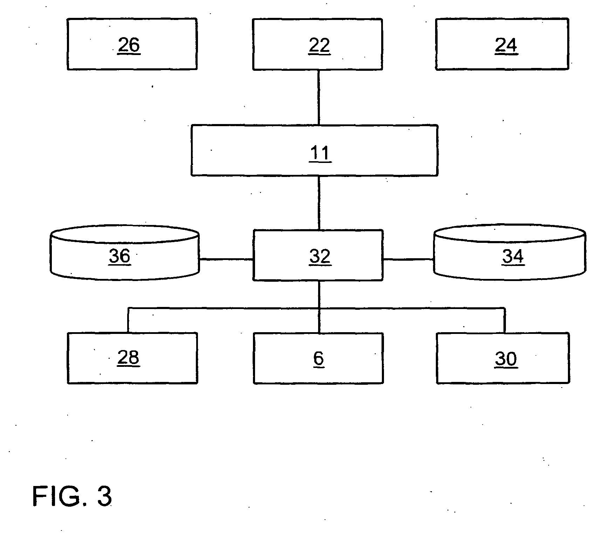

Fig. 3 zeigt schematisch ein Blockschaltbild einer weiteren bevorzugten Ausführungsform einer erfindungsgemäßen Vorrichtung zur Informationsausgabe und/oder Hilfestellung für den Benutzer eines Kraftfahrzeugs, wobei die Erklärungseinheit 11 als multimodaler virtueller Fahrzeugassistent ausgebildet ist. Des Weiteren sind manuelle interaktive Einrichtungen 26, die beispielsweise Bedienknöpfe, Touchscreens, etc. sein können, ein Kamerasystem 22 und eine Spracherkennungseinrichtung 24 vorgesehen, die zumindest teilweise auch Bestandteil einer Ausgabeeinheit 2 (s. Fig. 1) bzw. einer Multifunktionsbedieneinheit sein können und gemeinsam mit dieser dann eine interaktive Benutzerschnittstelle (s. Fig. 2) bilden können. Des Weiteren sind, jeweils beispielsweise in einem Speichermedium und/oder einer Datenbank gespeichert, Fahrzeugkonfigurationsdaten 36 und mindestens ein abgespeichertes Benutzermodell 34, das idealerweise zum aktuellen Benutzer gehört, vorgesehen. Die Erfassungseinheit und die Auswerteeinheit 10 (s. Fig. 1) sind in dieser Ausführungsform zu einem Kontext-Interpretierer 32 zusammengefasst. Außerdem stehen neben Daten bezüglich einer Fahrsituation 6 auch Daten bezüglich einer Umgebungssituation 28 zur Verfügung. Letztere können beispielsweise aktuelle Statusdaten bezüglich Fahrzeugkomponenten 5 (s. Fig. 1) umfassen, aber auch mittels weiterer Sensoren erfasste Umgebungsdaten, z.B. Temperatur, Umgebungsluftdruck, Windrichtung und -geschwindigkeit, Fahrbahnbeschaffenheit, Niederschlag, etc. Außerdem stehen Daten aus einer drahtlosen Verbindung 30 zur Verfügung. Diese können beispielsweise von einem Mobiltelefon, einem Online-Portal, einem Internet-Serviceprovider, einem Laptop oder einem stationären PC, etc. stammen. Der Kontext-Interpretierer 32 greift auf die Daten bezüglich einer Umgebungssituation 28, die Daten bezüglich einer Fahrsituation 6, die Daten aus einer drahtlosen Verbindung 30, die Fahrzeugkonfigurationsdaten 36 und das Benutzermodell 34 zu, filtert die darin enthaltene Information und interpretiert die Bedeutung der zugrunde liegende Situation. Die als multimodaler virtueller Fahrzeugassistent ausgebildete Erklärungseinheit 11 steht in Verbindung mit dem Kontext-Interpretierer 32 und sieht vorzugsweise einen anthropomorphen virtuellen Charakter, d.h. einen Avatar 20 (s. Fig. 2) zur Präsentation von Informationen und Hilfestellungen vor. Die Erklärungseinheit 11 kann dann beispielsweise dem Benutzer die Information bezüglich der vom Kontext-Interpretierer 32 ermittelten Situation durch den Avatar 20 beispielsweise mittels akustischer Sprachausgabe mitteilen. Zusätzlich zu den manuellen interaktiven Einrichtungen 26 kann der Benutzer über die Spracherkennungseinrichtung 24 mit dem Avatar 20 bzw. der Erklärungseinheit 11 kommunizieren. Durch Verwendung des mit der Erklärungseinheit 11 verbundenen Kamerasystems 22, welches das Verhalten des Benutzers erfasst, kann der Avatar 20 beispielsweise der Blickrichtung des Benutzers folgen, den Benutzer anschauen und unmittelbar auf diesen eingehen und einwirken. Die Erklärungseinheit 11 verfügt dabei vorzugsweise über eine eigene Kameraauswerteeinheit (nicht dargestellt), um die von dem Kamerasystem 22 stammenden Informationen auszuwerten und zu interpretieren. In Abhängigkeit des gespeicherten Benutzermodells 34, der Gestik und Mimik des Benutzers sowie dessen Blickrichtung hat der multimodale virtuelle Fahrzeugassistent (d.h. die Erklärungseinheit 11, repräsentiert durch den Avatar 20) die Fähigkeit, Bedürfnisse des Benutzers zu erkennen, dessen Handlungen vorwegzunehmen bzw. vorzubereiten (z.B. Menüeinstellungen vornehmen, Telefonverbindung herstellen, Radio einschalten, etc.) und mit dem Benutzer diesbezüglich zu kommunizieren.

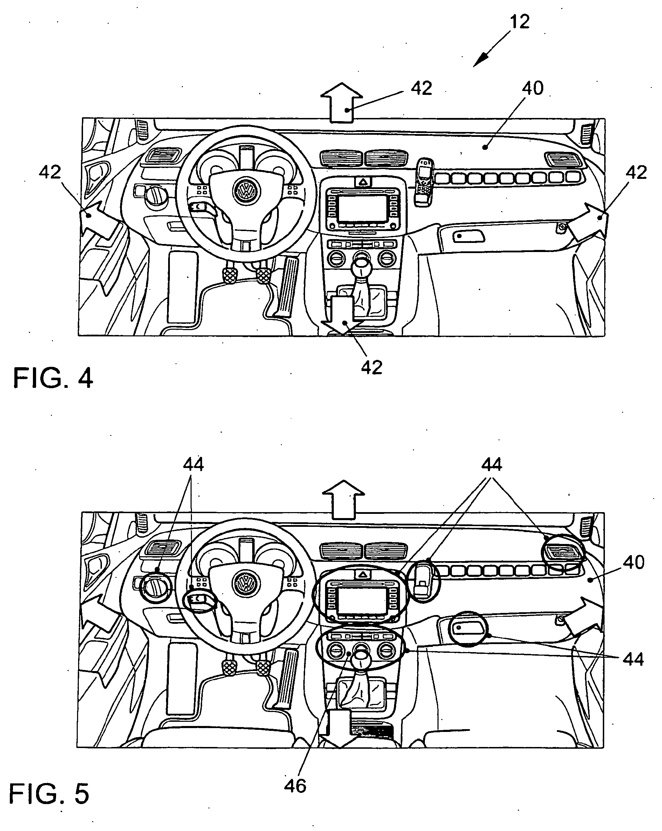

In Fig. 4 ist eine Ansicht einer interaktiven Benutzerschnittstelle 12 dargestellt, die für eine grafische menügesteuerte Erfassung einer Benutzerauswahl ausgestaltet ist und auf einem Touchscreen dargestellt ist. Dargestellt ist eine Teilansicht eines Kraftfahrzeugs, die ein Cockpit des Kraftfahrzeugs wiedergibt. Hierauf sind die verschiedenen Fahrzeugsysteme und Fahrzeugelemente zu erkennen, die unter anderem zur Ausführung und/oder Bedienung einer Vielzahl von Fahrzeugfunktionen und in unterschiedlichen Fahrsituationen verwendet werden. Zusätzlich sind als Pfeile ausgebildete grafische Elemente 42 zu erkennen, die ein Wechseln zu anderen Ansichten ermöglichen, die andere Teilansichten des Kraftfahrzeugs darstellen. Über eine Berührung eines der Fahrzeugsysteme oder der Fahrzeugelemente können die hierzu zugeordneten ausgebbaren Informationen ausgewählt werden.

Um eine Auswahl der Fahrzeugfunktionen, Fahrzeugelemente und Fahrzeugsysteme zu erleichtem, über die ausgebare Informationen zur Verfügung stehen, sind diese Fahrzeugfunktionen, Fahrzeugelement und Fahrzeugsysteme erfindungsgemäß grafisch hervorgehoben. Hierbei sind meist mehrere Fahrzeugelemente, die einer Fahrzeugfunktion zugeordnet sind, zu einer Gruppe zusammengefasst. In Fig. 5 eine zu Fig. 4 ähnliche Ansicht dargestellt, in der einige der Fahrzeugfunktionen, Fahrzeugelement und Fahrzeugsysteme oder Gruppen exemplarisch durch einen Kreis 44 grafisch hervorgehoben sind. In anderen Ausführungsformen wird die Hervorhebung vorzugsweise farbig ausgestaltet sein. Beispielhaft sind die als Bedienelemente ausgestalteten Fahrzeugelemente des Fahrzeugsystems Klima- und Belüftungsanlage zu einer ersten Gruppe zusammengefasst. Das Fahrzeugsystem Klima- und Belüftungsanlage stellt die Fahrzeugfunktion Klimatisieren und Belüften bereit. Hieran kann noch einmal deutlich erkannt werden, dass in dem hier verwendeten Kontext eine Unterscheidung der Begriffe Fahrzeugfunktion, Fahrzeugsystem und Fahrzeugelement usw. nicht sinnvoll ist, sofern eine solche Abgrenzung überhaupt möglich ist. Ebenso ist ein Bedienelement exemplarisch hervorgehoben, über das eine Geschwindigkeitsregelanlage bzw. eine Geschwindigkeitsregelfunktion bedient wird.

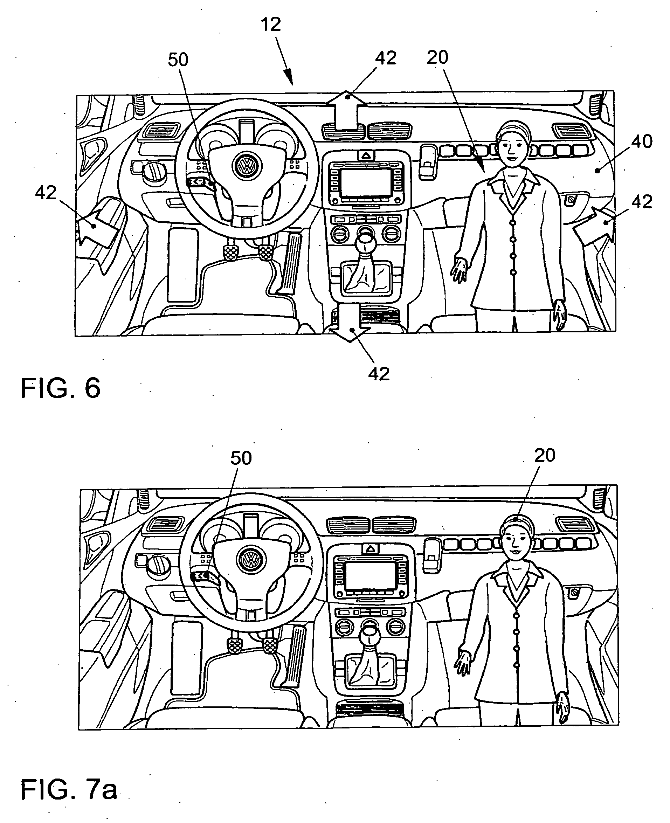

Auch eine grafische menügestützte Benutzerwunsch-Auswahl kann durch einen anthropomorphen virtuellen Charakter, d.h. einen Avatar 20, unterstützt werden, wie dieses in Fig. 6 dargestellt ist, die einer Darstellung nach Fig. 4 ähnelt.

Wird bei der Ausführungsform nach Fig. 5 das als Bedienhebel 50 ausgebildete Bedienelement, über welches die Geschwindigkeitsregelanlage bedient wird, berührt, so gelangt man zu einer Informationsausgabe durch die Erklärungseinheit 11, die in Fig. 7a bis 7g exemplarisch wiedergegeben ist.

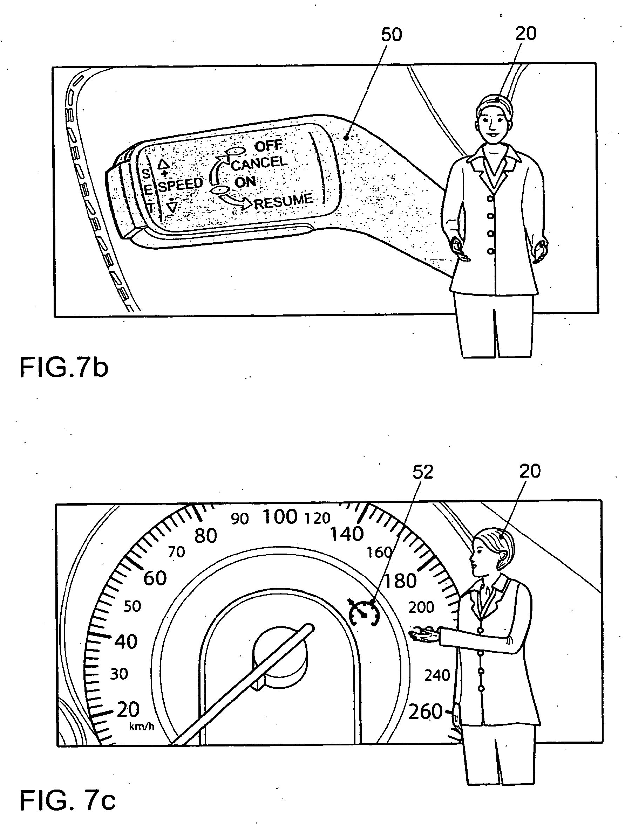

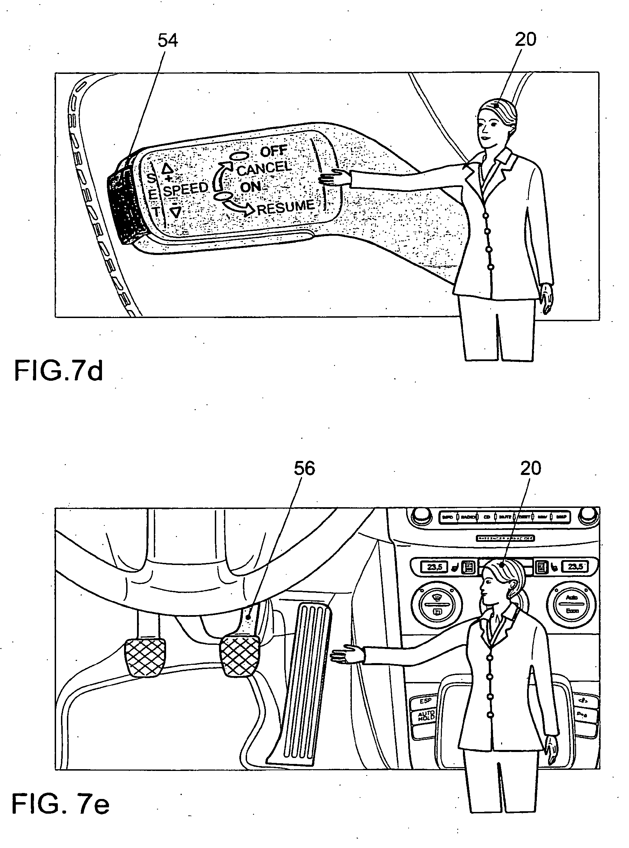

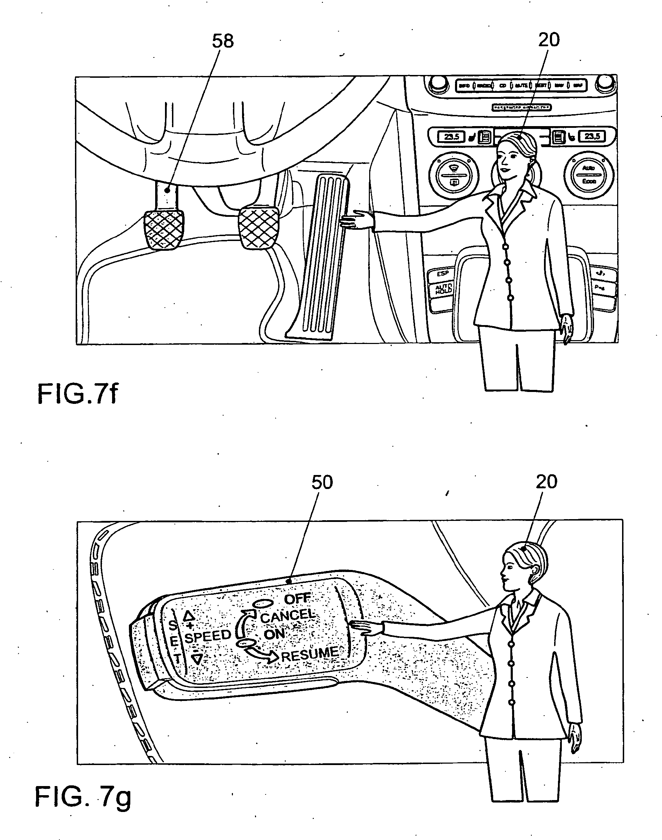

Fig. 7 zeigt die Informationsausgabe zur Erklärung der Geschwindigkeitsregelanlage nach Auswahl derselben, die mithilfe eines über die Benutzerschnittstelle ausgegebenen Films erfolgt, in welchem ein Avatar 20 durch Hand- und Körperbewegungen sowie Sprachausgabe eine Erklärungsunterstützung gibt. Nach der Auswahl erscheint ein Bild der Fig. 7a. Der Avatar 20 teilt durch Hand und Körperbewegung und durch Sprachausgabe über eine akustische Ausgabeeinrichtung mit: "Ich werde Ihnen zeigen, wie Sie die elektronische Geschwindigkeitsregelanlage, kurz GRA, bedienen können." In Fig. 7a ist das Cockpit des Fahrzeuges mit allen Anzeige- und Bedieneinrichtungen dargestellt. Der Bedienhebel 50 der Geschwindigkeitsregelanlage mit allen ihren Bedienelementen ist farblich hervorgehoben gezeigt. Danach erscheint das Anzeigebild der Fig. 7b. Der Bedienhebel 50 ist gegenüber der Darstellung in Fig.7a herangezoomt und nimmt den größten Teil der Anzeigfläche ein. Der Bedienhebel 50 ist auch hier farblich hervorgehoben gegenüber dem Hintergrund dargestellt. Der Avatar 20 gibt Angaben über die Funktion der Geschwindigkeitsregelanlage: "Die Geschwindigkeitsregelanlage hält eine eingestellte Geschwindigkeit zwischen 30 und 210 km/h konstant." Danach gibt der Avatar 20 Informationen zum Einschalten der Geschwindigkeitsregelanlage. "Ziehen Sie diesen Hebel zum Lenkrad hin, bis er einrastet." Im Film bewegt sich der Bedienhebel 50 zum Benutzer hin. Im Filmablauf erscheint Fig. 7c, die einen Ausschnitt des Kombiinstrumentes mit der Geschwindigkeitsanzeige und einem Symbol 52 zeigt. Der Avatar 20 weist durch eine Handbewegung und die Sprachausgabe auf das Symbol 52 hin: "Nach dem Einschalten erscheint dieses Symbol im Kombiinstrument." Danach erklärt der Avatar 20 das Setzen bzw. Speichern der gewünschten Geschwindigkeit: "Fahren Sie mit der gewünschten Geschwindigkeit und drücken Sie die Taste ,Set' seitlich am Hebel." Die "Set"-Taste 54 wird gegenüber den restlichen Bedienelementen zur verbesserten Erkennbarkeit hervorgehoben (Fig. 7d). Nach dem Setzen der Geschwindigkeit erklärt der Avatar 20 die Möglichkeit des Erhöhens und Erniedrigens der gespeicherten Geschwindigkeit auf ähnliche Weise. Zur Darstellung, wie das vorübergehende Ausschalten der Geschwindigkeitsregelanlage mittels des Avatars 20 erklärt wird, werden Fig. 7e - 7g des Filmes herangezogen. In den Figuren ist das jeweilige Bedienelement, Bremspedal 56, Kupplungspedal 58 oder Bedienhebel 50, welches zum Ausschalten verwendet werden kann, gegenüber dem Hintergrund hervorgehoben. Zusätzlich wird die Erklärung der Bedienfunktion über die Bewegung und die Sprachausgabe des Avatars 20 unterstützt: "Treten sie das Bremspedal, treten Sie bei schaltgetriebenen Fahrzeugen das Kupplungspedal oder drücken Sie den Bedienhebel leicht vom Lenkrad weg. Zum Wiedereinschalten der Geschwindigkeitsregelanlage lassen Sie das Bremspedal bzw. das Kupplungspedal los und ziehen Sie den Bedienhebel leicht zum Lenkrad hin."

Bei einer Ausführungsform ist vorgesehen, dass die Informationsausgabe interaktiv in der Weise ausgestaltet ist, dass die ausgegebene Information abhängig von der Interaktion des Benutzers mit den realen Fahrzeugsystemen und Fahrzeugfunktionen ist. In dem soeben erläuterten Beispiels, kann die Informationsausgabe beispielsweise jeweils an den Stellen unterbrochen werden, an denen bei einem realen Bedienablauf eine Betätigungshandlung des Fahrers notwendig ist. Bevor der Avatar in dem obigen Beispiel auf das Symbol im Kombiinstrument hinweist, ist es bei dieser Ausführungsform notwendig, dass der Benutzer den Bedienhebel an das Lenkrad heranzieht bis dieser einrastet. Anschließend wird die Informationsausgabe fortgesetzt, bis zu dem Punkt, an dem der Fahrer die gewünschte Geschwindigkeit über ein Drücken der "Set"-Taste festlegen oder setzen muss. Erst wenn er die "Set"-Taste betätigt hat, wird die Erläuterung fortgesetzt, wie die Geschwindigkeitsregelanlage ausgeschaltet werden kann. Eine weitere Unterbrechung ist sinnvollerweise vor der Erläuterung vorgesehen, wie die Geschwindigkeitsregelanlage wieder aktiviert werden kann.

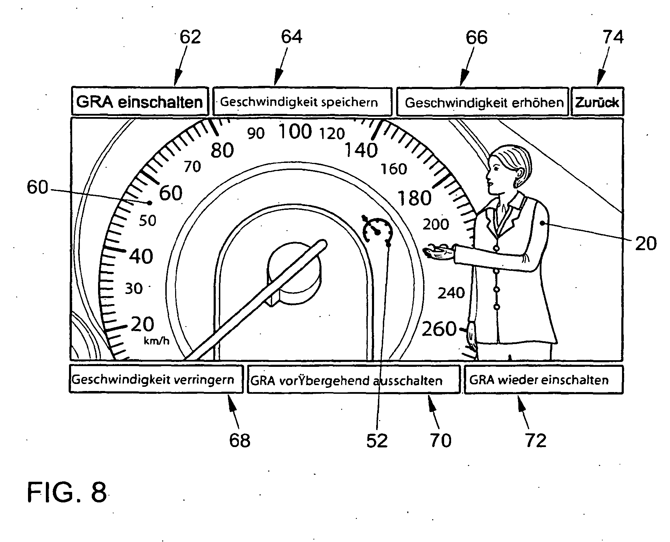

In Fig. 8 ist eine weitere bevorzugte Ausführungsform des grafischen Teils der Informationsausgabe dargestellt. Bei dieser Ausführungsform, bei der ebenfalls die Geschwindigkeitsregelanlage über einen Film dargestellt wird, ist ein Bild gezeigt, bei dem der Avatar 20 erklärt, wo und mit welchem Symbol die eingeschaltete Geschwindigkeitsregelanlage in dem Multifunktionsanzeigeelement 60 signalisiert wird. Zusätzlich sind in dieser Ausführungsform grafische Elemente 62 - 74 angezeigt. Die grafischen Elemente 62 - 74 weisen alphanumerische Beschriftungen auf. Diese geben an, welche ausgebbaren Informationen über ein Betätigen des jeweiligen grafischen Elements, die als virtuelle Bedienelemente ausgestaltet sind, auswählbar sind. Vorzugsweise sind die auswählbaren Informationen inhaltlich "verwandt", das heißt, beschreiben Fahrzeugfunktionen in dem aktuellen Bedienkontext oder dem erläuterten Bedienkontext, die bevorzugt von dem Benutzer ausgewählt werden. Auch die aktuell beschriebene Fahrzeugfunktion oder Teilfunktion, hier "GRA einschalten", kann einem der grafischen Elmente zugeordnet sein, das dann vorzugsweise grafisch hervorgehoben ist. Über die grafischen Elemente 64 - 72 können die Teilfunktionen "Geschwindigkeit Speichern", Geschwindigkeit erhöhen", Geschwindigkeit verringern", "GRA vorübergehend ausschalten" und "GRA wieder einschalten" ausgewählt werden. Das mit "Zurück" beschriftete grafische Element 74 ermöglicht, über eine Berührung dieses Elements 74 in das grafische Menü zurückzukehren, in dem die Fahrzeugfunktion Geschwindigkeitsregelanlage auswählbar war. Beispielsweise eine Ansicht ähnlich zu der nach Fig. 6. Eine andere Ausführungsform kann vorsehen, dass über die "Zurück"-Taste zu der vorherigen Informationsausgabe zurückgekehrt wird, d.h., diese beispielsweise wiederholt wird.

In einem Informationsmodus kann ein Benutzerwunsch für eine Informationsausgabe auch über eine reale Betätigungshandlung eines Benutzers erfasst werden. Betätigt der Fahrer beispielsweise den Bedienhebel, über den die Geschwindigkeitsregelanlage bedient wird, so wird eine Informationsausgabe bereitgestellt, die die Geschwindigkeitsregelanlage beschreibt oder erläutert. Erfolgt die Ausgabe während der Fahrt, so wird die Ausgabe vorzugsweise nur akustisch erfolgen. Im Stand des Fahrzeugs kann vorgesehen sein, dass im Informationsmodus zusätzlich eine grafische Ausgabe erfolgt.

### Bezugszeichenliste

- 2: Ausgabeeinheit
- 5: Statusdaten bezüglich Fahrzeugkomponenten
- 6: Daten bezüglich einer Fahrsituation
- 7: Daten bezüglich einer Fahrersituation
- 10: Auswerteeinheit
- 11: Erklärungseinheit
- 12: interaktive Benutzerschnittstelle
- 14: Dateneingabe
- 15: Display
- 18: Tasten
- 20: Avatar
- 22: Kamerasystem
- 24: Spracherkennungseinrichtung
- 26: manuelle interaktive Einrichtungen
- 28: Daten bezüglich einer Umgebungssituation
- 30: Daten aus einer drahtlosen Verbindung
- 32: Kontext-Interpretierer
- 34: Benutzermodell
- 36: Fahrzeugkonfigurationsdaten
- 40: Cockpit
- 42: grafisches Element
- 44: Kreis
- 46: Klima- und Belüftungsanlage
- 50: Bedienhebel
- 52: Symbol
- 54: "Set"-Taste
- 56: Bremspedal
- 58: Kupplungspedal
- 60: Multifunktionsanzeigeelement
- 62 - 74: grafische Elemente

## Patentansprüche

1. Vorrichtung zur Informationsausgabe und/oder Hilfestellung für den Benutzer eines Kraftfahrzeugs, umfassend
- mindestens eine Ausgabeeinheit (2) zur Ausgabe von Information,
- mindestens eine Erfassungseinheit zum Erfassen von Statusdaten bezüglich von Fahrzeugkomponenten (5) und/oder Daten bezüglich einer Fahr- und/oder Fahrersituation (6, 7),
- mindestens eine Auswerteeinheit (10) zum Auswerten und Interpretieren der von der Erfassungseinheit erfassten Daten,
- mindestens eine Erklärungseinheit (11) zum Auswählen und Bereitstellen von Information und/oder Hilfestellung für den Benutzer in Abhängigkeit der von der Auswerteeinheit (10) ausgewerteten und interpretierten Daten,
wobei zur Präsentation der ausgegebenen Information mindestens eine aus einer Mehrzahl von verfügbaren Arten der Informationsausgabe in Abhängigkeit der Fahrsituation und/oder des Benutzerwunsches auswählbar und einsetzbar ist und die Bereitstellung der Information selbsttätig in Abhängigkeit einer Fahrsituation und/oder eines vom Benutzer und/oder von der Erklärungseinheit (11) festgelegten Zeitpunkts erfolgt,
wobei die mindestens eine Ausgabeeinheit (2) eine grafische Anzeige umfasst, die mit einer positionsempfindlichen Sensoreinheit gekoppelt ist, **dadurch gekennzeichnet, dass** auf der Anzeige mindestens eine Teilansicht des Kraftfahrzeugs grafisch darstellbar ist, und mittels der positionsempfindlichen Sensoreinheit ein Benutzerwunsch für eine Informationsausgabe über eine Fahrzeugfunktion, eine Fahrsituation und/oder ein Fahrzeugsystem erfassbar ist, der über ein Berühren und/oder Annähern an die grafische Darstellung des Fahrzeugsystems und/oder eines mit der Bedienung und/oder Ausführung der Fahrzeugfunktion oder Fahrsituation beteiligten Fahrzeugsystems oder Fahrzeugelements durch den Nutzer ausgedrückt ist,
wobei die Ausgabeeinheit (2) die Fahrzeugsysteme und/oder -elemente und/oder Gruppen hiervon, über die ausgebbare informationen vorliegen, und die Fahrzeugsysteme und/oder Elemente und/oder Gruppen hiervon, mit denen Fahrzeugfunktionen oder Fahrsituationen ausführbar oder bedienbar sind, über die ausgebbare Informationen vorliegen, in der mindestens einen Teilansicht grafisch, insbesondere farblich, hervorhebt.

2. Vorrichtung nach Anspruch 1, **dadurch gekennzeichnet, dass** zur Informationsausgabe und/oder Unterstützung der Informationsausgabe ein mittels der Ausgabeeinheit (2) erzeugbarer anthropomorpher virtueller Charakter vorgesehen ist.

3. Vorrichtung nach Anspruch 1 oder 2, **dadurch gekennzeichnet, dass** mindestens ein Kamerasystem (22) zur Erfassung des Verhaltens des Benutzers vorgesehen ist und die Bereitstellung der Information zusätzlich in Abhängigkeit des von dem Kamerasystem (22) erfassten Verhaltens des Benutzers erfolgt.

4. Vorrichtung nach Anspruch 3, **dadurch gekennzeichnet, dass** durch das Kamerasystem (22) die Blickrichtung des Benutzers erfassbar ist und die Bereitstellung der Information in Abhängigkeit der Blickrichtung des Benutzers erfolgt.

5. Vorrichtung nach einem der genannten Ansprüche, **dadurch gekennzeichnet, dass** an-hand der mittels der Ausgabeeinheit (2) präsentierten Information eine interaktive Anleitung des Benutzers zur Beherrschung von Fahrzeugfunktionen und/oder Fahrsituationen durchführbar ist.

6. Vorrichtung nach einem der genannten Ansprüche, **dadurch gekennzeichnet, dass** die grafische Anzeige mit der positionsempfindlichen Sensoreinheit als Touchscreen ausgebildet ist.

7. Vorrichtung nach einem der genannten Ansprüche, **dadurch gekennzeichnet, dass** die Teilansicht grafische Elemente (42) umfasst, um eine Darstellung anderer Teilansichten über eine Berührung oder Annäherung an diese grafischen Elemente (42) auszulösen.

8. Vorrichtung nach einem der genannten Ansprüche, **dadurch gekennzeichnet, dass** die mindestens eine grafische Ansicht ein Bestandteil eines grafischen, insbesondere hierarchischen Menüsystems zum Erfassen des Benutzerwunsches für die ausgebbare Information ist.

9. Vorrichtung nach einem der der genannten Ansprüche, **dadurch gekennzeichnet, dass** eine Art der Informationsausgabe eine grafische Darstellung zumindest eines Teils der ausgebbaren Informationen umfasst, wobei die grafische Darstellung zusätzlich Elemente, die vorzugsweise alphanumerische Informationen umfassen, zum Erfassen eines Benutzerwunsches für eine Informationsausgabe von mit dem zumindest einen Teil der ausgebbaren Informationen in Zusammenhang stehenden weiteren ausgebbaren Informationen und/oder für eine Menünavigation umfasst.

10. Vorrichtung nach einem der genannten Ansprüche, **dadurch gekennzeichnet, dass** ein Informationsmodus vorgesehen ist, in dem eine interaktive Handhabung oder Betätigung eines realen Fahrzeugsystems oder einer realen Fahrzeugfunktion als Benutzerwunsch für eine Informationsausgabe über das entsprechende Fahrzeugsystem oder die entsprechende Fahrzeugfunktion interpretierbar ist.

11. Vorrichtung nach einem der genannten Ansprüche, **dadurch gekennzeichnet, dass** die Arten der Informationsausgabe zumindest teilweise individuell konfigurierbar sind.

12. Vorrichtung nach einem der genannten Ansprüche, **dadurch gekennzeichnet, dass** die Arten der Informationsausgabe durch zusätzliche Präsentationsmittel ergänzbar und individualisierbar sind.

13. Vorrichtung nach einem der genannten Ansprüche, **dadurch gekennzeichnet, dass** die Vorrichtung eine Lernfunktion aufweist, bei der für einen Benutzer durch aktives Befolgen von mittels der Erklärungseinheit (11) bereitgestellten Anweisungen das Bedienen mindestens einer Fahrzeugfunktion erlernbar ist, wobei der Fahrer in Abhängigkeit der von ihm durchgeführten Handlungen von der Erklärungseinheit (11) mindestens eine positive oder negative Rückmeldung erhält.

14. Vorrichtung nach einem der genannten Ansprüche, **dadurch gekennzeichnet, dass** die mittels der Ausgabeeinheit (2) präsentierte Information, insbesondere die mittels der Erklärungseinheit (1) bereitgestellten Anweisungen, der interaktiven Anleitung des Benutzers zur Beherrschung von Fahrzeugfunktionen und/oder Fahrsituationen abhängig von einer realen Interaktion des Benutzers mit dem Fahrzeug, insbesondere den realen Fahrzeugsystemen und Fahrzeugfunktionen, ist.

15. Vorrichtung nach einem der genannten Ansprüche, **dadurch gekennzeichnet, dass** die Ausgabeeinheit (2) zumindest als Bestandteil einer Multifunktionsbedieneinheit und/oder eines Navigationssystems ausgebildet ist.

16. Vorrichtung nach einem der genannten Ansprüche, **dadurch gekennzeichnet, dass** durch den Benutzer bedarfsweise mittels einer Eingabevorrichtung mindestens ein Marker setzbar ist, wodurch die Ausgabe von mittels der Erklärungseinheit (11) zu einem aktuellen Zeitpunkt bereits ausgewählter und bereitstellbarer Information auf einen späteren Zeitpunkt verschiebbar ist.

17. Vorrichtung nach einem der genannten Ansprüche, **dadurch gekennzeichnet, dass** die Eingabevorrichtung als Einrichtung zur Spracherkennung (24) ausgebildet ist.

18. Vorrichtung nach Anspruch 17, **dadurch gekennzeichnet, dass** mittels der Einrichtung zur Spracherkennung (24) mindestens eine Stimmkenngröße des Benutzers erfassbar ist.

19. Verfahren zur Informationsausgabe und/oder Hilfestellung für den Benutzer eines Kraftfahrzeugs, umfassend
- mindestens eine Ausgabeeinheit (2) zur Ausgabe von Information,
- mindestens eine Erfassungseinheit zum Erfassen von Statusdaten bezüglich von Fahrzeugkomponenten (5) und/oder Daten bezüglich einer Fahr- und/oder Fahrersituation (6, 7),
- mindestens eine Auswerteeinheit (10) zum Auswerten und Interpretieren der von der Erfassungseinheit erfassten Daten,
- mindestens eine Erklärungseinheit (11) zum Auswählen und Bereitstellen von Information und/oder Hilfestellung für den Benutzer in Abhängigkeit der von der Auswerteeinheit (10) ausgewerteten und interpretierten Daten,
wobei zur Präsentation der ausgegebenen Information mindestens eine aus einer Mehrzahl von verfügbaren Arten der Informationsausgabe in Abhängigkeit der Fahrsituation und/oder des Benutzerwunsches ausgewählt und eingesetzt wird und die Bereitstellung und Ausgabe der Information selbsttätig in Abhängigkeit einer Fahrsituation und/oder eines vom Benutzer und/oder von der Erklärungseinheit (11) festgelegten Zeitpunkts erfolgt,
wobei die mindestens eine Ausgabeeinheit (2) eine grafische Anzeige umfasst, die mit einer positionsempfindlichen Sensoreinheit gekoppelt ist, **dadurch gekennzeichnet, dass** auf der Anzeige mindestens eine Teilansicht des Kraftfahrzeugs grafisch dargestellt wird und mittels der positionsempfindlichen Sensoreinheit ein Benutzerwunsch für eine Informationsausgabe über eine Fahrzeugfunktion, eine Fahrsituation und/oder ein Fahrzeugsystem erfasst wird, wobei der Benutzerwunsch über ein Berühren und/oder Annähern an die grafische Darstellung des Fahrzeugsystems und/oder eines mit der Bedienung und/oder Ausführung der Fahrzeugfunktion oder Fahrsituation beteiligten Fahrzeugsystems oder Fahrzeugelements durch den Nutzer ausgedrückt ist,
wobei die Fahrzeugsysteme und/oder -elemente und oder Gruppen hiervon, über die ausgebare Informationen vorliegen, und die Fahrzeugsysteme und/oder die Fahrzeugelemente und/oder Gruppen hiervon, mit denen Fahrzeugfunktionen oder Fahrsituationen ausführbar oder bedienbar sind, über die ausgebbare Informationen vorliegen, in der mindestens einen Teilansicht grafisch, insbesondere farblich, hervorgehoben dargestellt werden.

20. Verfahren nach Anspruch 19, **dadurch gekennzeichnet, dass** zur Informationsausgabe und/oder Unterstützung der Informationsausgabe ein mittels der Ausgabeeinheit (2) erzeugbarer anthropomorpher virtueller Charakter vorgesehen ist.

21. Verfahren nach einem der Ansprüche 19 oder 20, **dadurch gekennzeichnet, dass** mindestens ein Kamerasystem (22) zur Erfassung des Verhaltens des Benutzers vorgesehen ist und die Bereitstellung der Information zusätzlich in Abhängigkeit des von dem Kamerasystem (22) erfassten Verhaltens des Benutzers erfolgt.

22. Verfahren nach Anspruch 21, **dadurch gekennzeichnet, dass** durch das Kamerasystem (22) die Blickrichtung des Benutzers erfasst wird und die Bereitstellung der Information in Abhängigkeit der Blickrichtung des Benutzers erfolgt.

23. Verfahren nach einem der Ansprüche 19 bis 22, **dadurch gekennzeichnet, dass** anhand der mittels der Ausgabeeinheit (2) präsentierten Information eine interaktive Anleitung des Benutzers zur Beherrschung von Fahrzeugfunktionen und/oder Fahrsituationen durchgeführt wird.

24. Verfahren nach einem der Ansprüche 19 bis 23, **dadurch gekennzeichnet, dass** die grafische Anzeige mit der positionsempfindlichen Sensoreinheit als Touchscreen ausgebildet ist und der Benutzerwunsch mittels des Touchscreens erfasst wird.

25. Verfahren nach einem der Ansprüche 19 bis 24, **dadurch gekennzeichnet, dass** in der Teilansicht grafische Elemente (42) dargestellt werden, um hierüber eine Darstellung anderer Teilansichten über eine Berührung oder Annäherung an diese grafischen Elemente (42) zu ermöglichen.

26. Verfahren nach einem der Ansprüche 19 bis 25, **dadurch gekennzeichnet, dass** die mindestens eine grafische Ansicht ein Bestandteil eines grafischen, insbesondere hierarchischen Menüsystems zum Erfassen des Benutzerwunsches für die ausgebbare Information ist.

27. Verfahren nach einem der Ansprüche 19 bis 26, **dadurch gekennzeichnet, dass** bei einer Art der Informationsausgabe zumindest ein Teil der ausgebbaren Informationen grafisch dargestellt wird, wobei die grafische Darstellung zusätzlich Elemente, die vorzugsweise alphanumerische Informationen umfassen, zum Erfassen eines Benutzerwunsches für eine Informationsausgabe von mit dem zumindest einen Teil der ausgebbaren Informationen in Zusammenhang stehenden weiteren ausgebbaren Informationen und/oder für eine Menünavigation umfasst.

28. Verfahren nach einem der Ansprüche 19 bis 27, **dadurch gekennzeichnet, dass** ein Informationsmodus vorgesehen ist, in dem eine interaktive Handhabung oder Betätigung eines realen Fahrzeugsystems oder einer realen Fahrzeugfunktion als Benutzerwunsch für eine Informationsausgabe über das entsprechende Fahrzeugsystem oder die entsprechende Fahrzeugfunktion interpretiert wird.

29. Verfahren nach einem der Ansprüche 19 bis 28, **dadurch gekennzeichnet, dass** die Arten der Informationsausgabe zumindest teilweise individuell konfiguriert werden.

30. Verfahren nach einem der Ansprüche 19 bis 29, **dadurch gekennzeichnet, dass** die Arten der Informationsausgabe durch zusätzliche Präsentationsmittel ergänzt und individualisiert werden.

31. Verfahren nach einem der Ansprüche 19 bis 30, **dadurch gekennzeichnet, dass** die Vorrichtung eine Lernfunktion aufweist, bei der für einen Benutzer durch aktives Befolgen von mittels der Erklärungseinheit (11) bereitgestellten Anweisungen das Bedienen mindestens einer Fahrzeugfunktion erlernt wird, wobei der Fahrer in Abhängigkeit der von ihm durchgeführten Handlungen von der Erklärungseinheit (11) mindestens eine positive oder negative Rückmeldung erhält.

32. Verfahren nach einem der Ansprüche 19 bis 31, **dadurch gekennzeichnet, dass** die mittels der Ausgabeeinheit (2) präsentierte Information, insbesondere die mittels der Erklärungseinheit (1) bereitgestellten Anweisungen, der interaktiven Anleitung des Benutzers zur Beherrschung von Fahrzeugfunktionen und/oder Fahrsituationen abhängig von einer realen Interaktion des Benutzers mit dem Fahrzeug, insbesondere den realen Fahrzeugsystemen und Fahrzeugfunktionen, ausgegeben wird.

33. Verfahren nach einem der Ansprüche 19 bis 32, **dadurch gekennzeichnet, dass** die Ausgabeeinheit (2) zumindest als Bestandteil einer Multifunktionsbedieneinheit und/oder eines Navigationssystems ausgebildet ist.

34. Verfahren nach einem der Ansprüche 19 bis 33, **dadurch gekennzeichnet, dass** durch den Benutzer bedarfsweise mittels einer Eingabevorrichtung mindestens ein Marker gesetzt wird, wodurch die Darstellung von mittels der Erklärungseinheit (11) zu einem aktuellen Zeitpunkt bereits ausgewählter und bereitstellbarer Information auf einen späteren Zeitpunkt verschoben wird.

35. Verfahren nach einem der Ansprüche 19 bis 34, **dadurch gekennzeichnet, dass** die Eingabevorrichtung als Einrichtung zur Spracherkennung ausgebildet ist.

36. Verfahren nach Anspruch 35, **dadurch gekennzeichnet, dass** mittels der Einrichtung zur Spracherkennung eine Stimmkenngröße des Benutzers erfasst wird.

## Claims

1. Device for outputting information and/or providing assistance to the user of a motor vehicle, comprising
- at least one output unit (2) for outputting information,
- at least one detection unit for detecting status data relating to vehicle components (5) and/or data relating to a driving situation and/or driver situation (6, 7),
- at least one evaluation unit (10) for evaluating and interpreting the data detected by the detection unit,
- at least one explanation unit (11) for selecting and making available information and/or assistance for the user as a function of the data which is evaluated and interpreted by the evaluation unit (10),
wherein, in order to present the information which is output, at least one type of information output which is available from a multiplicity of available types of information output can be selected and used as a function of the driving situation and/or the user's request, and the information is made available automatically as a function of a driving situation and/or a time which is defined by the user and/or by the explanation unit (11), wherein the at least one output unit (2) comprises a graphic display which is coupled to a position-sensitive sensor unit, **characterized in that** at least one partial view of the motor vehicle can be displayed graphically on the display, and a user's request for the outputting of information about a vehicle function, a driving situation and/or a vehicle system can be detected by means of the position-sensitive sensor unit, which user's request is expressed by the user by touching and/or approaching the graphic display of the vehicle system and/or a vehicle system or vehicle element which is involved in the operator control and/or execution of the vehicle function or driving situation, wherein in the at least one partial view the output unit (2) highlights graphically, in particular through colour, the vehicle systems and/or elements and/or groups thereof about which information which can be output is present, and the vehicle systems and/or elements and/or groups thereof with which vehicle functions or driving situations can be executed or controlled and about which information which can be output is present.

2. Device according to Claim 1, **characterized in that** an anthropomorphic, virtual character, which can be generated by means of the output unit (2), is provided for outputting information and/or assisting the outputting of information.

3. Device according to Claim 1 or 2, **characterized in that** at least one camera system (22) is provided for sensing the behaviour of the user, and the information is additionally made available as a function of the user's behaviour, which is detected by the camera system (22).

4. Device according to Claim 3, **characterized in that** the user's viewing direction can be detected by the camera system (22), and the information is made available as a function of the user's viewing direction.

5. Device according to one of the specified claims, **characterized in that** interactive guidance of the user in dealing with vehicle functions and/or driving situations can be provided on the basis of the information presented by means of the output unit (2).

6. Device according to one of the specified claims, **characterized in that** the graphic display is embodied as a touchscreen with the position-sensitive sensor unit.

7. Device according to one of the specified claims, **characterized in that** the partial view comprises graphic elements (42) for triggering a display of other partial views by these graphic elements (42) being touched or approached.

8. Device according to one of the specified claims, **characterized in that** the at least one graphic view is a component of a graphic menu system, in particular a hierarchical menu system, for detecting the user's request for the information which can be output.

9. Device according to one of the specified claims, **characterized in that** one type of information output comprises a graphic display of at least a portion of the information which can be output, wherein the graphic display comprises additional elements, which preferably comprise alphanumeric information, for detecting a user's request for an information output of further information which can be output and which relates to the at least one portion of information which can be output, and/or for menu navigation.

10. Device according to one of the specified claims, **characterized in that** an information mode is provided in which interactive handling or activation of a real vehicle system or of a real vehicle function can be interpreted as a user's request for an information output about the corresponding vehicle system or the corresponding vehicle function.

11. Device according to one of the specified claims, **characterized in that** the types of information output can be configured individually at least to a certain extent.

12. Device according to one of the specified claims, **characterized in that** the types of information output can be supplemented and individualized by additional presentation means.

13. Device according to one of the specified claims, **characterized in that** the device has a learning function in which the operator control of at least one vehicle function can be learnt by a user by actively following instructions which are made available by means of the explanation unit (11), wherein the driver receives at least one item of positive or negative feedback from the explanation unit (11) as a function of the actions carried out by said driver.

14. Device according to one of the specified claims, **characterized in that** the information which is presented by means cf the output unit (2), in particular the instructions which are made available by means of the explanation unit (1), for the interactive guidance of the user in dealing with vehicle functions and/or driving situations is dependent on real interaction of the user with the vehicle, in particular the real vehicle systems and functions.

15. Device according to one of the specified claims, **characterized in that** the output unit (2) is embodied at least as a component of a multifunction operator control unit and/or of a navigation system.

16. Device according to one of the specified claims, **characterized in that** at least one marker can be set by the user, if necessary by means of an input device, as a result of which the outputting of information which has already been selected and can be made available by means of the explanation unit (11) at a current time can be postponed to a later time.

17. Device according to one of the specified claims, **characterized in that** the input device is embodied as a voice recognition device (24).

18. Device according to Claim 17, **characterized in that** at least one voice characteristic variable of the user can be detected by means of the voice recognition device (24).

19. Method for outputting information and/or providing assistance to the user of a motor vehicle, comprising
- at least one output unit (2) for outputting information,
- at least one detection unit for detecting status data relating to vehicle components (5) and/or data relating to a driving situation and/or driver situation (6, 7),
- at least one evaluation unit (10) for evaluating and interpreting the data detected by the detection unit,
- at least one explanation unit (11) for selecting and making available information and/or assistance for the user as a function of the data which is evaluated and interpreted by the evaluation unit (10),
wherein, in order to present the information which is cutout, at least one type of information output which is available from a multiplicity of available types of information output is selected and used as a function of the driving situation and/or the user's request, and the information is made available and output automatically as a function of a driving situation and/or a time which is defined by the user and/or by the explanation unit (11), wherein the at least one output unit (2) comprises a graphic display which is coupled to a position-sensitive sensor unit, **characterized in that** at least one partial view of the motor vehicle is displayed graphically on the display, and a user's request for the outputting of information about a vehicle function, a driving situation and/or a vehicle system is detected by means of the position-sensitive sensor unit, wherein the user request is expressed by the user by touching and/or approaching the graphic display of the vehicle system and/or a vehicle system or vehicle element which is involved in the operator control and/or execution of the vehicle function or driving situation, wherein the vehicle systems and/or elements and/or groups thereof about which information which can be output is present, and the vehicle systems and/or the vehicle elements and/or groups thereof with which vehicle functions or driving situations can be executed or operator-controlled and about which information which can be output is present, are displayed in the at least one partial view in a graphically highlighted form, in particular through colour.

20. Method according to Claim 19, **characterized in that** an anthropomorphic, virtual character, which can be generated by means of the output unit (2), is provided for outputting information and/or assisting the outputting of information.

21. Method according to one of Claims 19 and 20, **characterized in that** at least one camera system (22) is provided for sensing the behaviour of the user, and the information is additionally made available as a function of the user's behaviour, which is detected by the camera system (22).

22. Method according to Claim 21, **characterized in that** the user's viewing direction is detected by the camera system (22), and the information is made available as a function of the user's viewing direction.

23. Device according to one of Claims 19 to 22, **characterized in that** interactive guidance of the user in dealing with vehicle functions and/or driving situations is provided on the basis of the information presented by means of the output unit (2).

24. Method according to one of Claims 19 to 23, **characterized in that** the graphic display is embodied as a touchscreen with the position-sensitive sensor unit, and the user's request is detected by means of the touchscreen.

25. Method according to one of Claims 19 to 24, **characterized in that** graphic elements (42) are displayed in the partial view in order in this way to permit other partial views to be displayed by touching or approaching these graphic elements (42).

26. Method according to one of Claims 19 to 25, **characterized in that** the at least one graphic view is a component of a graphic menu system, in particular a hierarchical menu system, for detecting the user's request for the information which can be output.

27. Method according to one of Claims 19 to 26, **characterized in that** one type of information output comprises a graphic display of at least a portion of the information which can be output, wherein the graphic display comprises additional elements, which preferably comprise alphanumeric information, for detecting a user's request for an information output of further information which can be output and which relates to the at least one portion of information which can be output, and/or for menu navigation.

28. Method according to one of Claims 19 to 27, **characterized in that** an information mode is provided in which interactive handling or activation of a real vehicle system or of a real vehicle function is interpreted as a user's request for an information output about the corresponding vehicle system or the corresponding vehicle function.

29. Method according to one of Claims 19 to 28, **characterized in that** the types of information output are configured individually at least to a certain extent.

30. Method according to one of Claims 19 to 29, **characterized in that** the types of information output are supplemented and individualized by additional presentation means.

31. Method according to one of Claims 19 to 30, **characterized in that** the device has a learning function in which the operator control of at least one vehicle function is learnt by a user by actively following instructions which are made available by means of the explanation unit (11), wherein the driver receives at least one item of positive or negative feedback from the explanation unit (11) as a function of the actions carried out by said driver.

32. Method according to one of Claims 19 to 31, **characterized in that** the information which is presented by means of the output unit (2), in particular the instructions which are made available by means of the explanation unit (1), for the interactive guidance of the user in dealing with vehicle functions and/or driving situations is output as a function of real interaction of the user with the vehicle, in particular the real vehicle systems and functions.

33. Method according to one of Claims 19 to 32, **characterized in that** the output unit (2) is embodied at least as a component of a multifunction operator control unit and/or of a navigation system.

34. Method according to one of Claims 19 to 33, **characterized in that** at least one marker is set by the user, if necessary by means of an input device, as a result of which the display of information which has already been selected and can be made available by means of the explanation unit (11) at a current time is postponed to a later time.

35. Method according to one of Claims 19 to 34, **characterized in that** the input device is embodied as a voice recognition device.

36. Method according to Claim 35, **characterized in that** at least one voice characteristic variable of the user is detected by means of the voice recognition device.

## Revendications

1. Dispositif de sortie d'informations et/ou d'aide à l'utilisateur d'un véhicule à moteur, comprenant
- au moins une unité de sortie (2) destinée à fournir en sortie des informations,
- au moins une unité de détection destinée à détecter des données d'état concernant des composants de véhicule (5) et/ou des données concernant une situation de conduite et/ou de conducteur (6, 7),
- au moins une unité d'analyse (10) destinée à analyser et à interpréter les données détectées par l'unité de détection,
- au moins une unité d'explication (11) destinée à sélectionner et à fournir des informations et/ou une aide à l'utilisateur en fonction des données analysées et interprétées par l'unité d'analyse (10),
dans lequel, pour présenter les informations fournies en sortie, au moins l'un d'une pluralité de types de sorties d'informations disponibles peut être sélectionné et défini en fonction de la situation de conduite et/ou de la demande de l'utilisateur et la fourniture des informations s'effectue automatiquement en fonction d'une situation de conduite et/ou d'un point dans le temps déterminé par l'utilisateur et/ou par l'unité d'explication (11), dans lequel l'au moins une unité de sortie (2) comprend un afficheur graphique qui est relié à une unité à capteur sensible à la position, **caractérisé en ce qu'**au moins une vue partielle du véhicule à moteur peut être représentée graphiquement sur l'afficheur, et **en ce qu'**une demande par l'utilisateur d'une sortie d'informations concernant une fonction du véhicule, une situation de conduite et/ou un système du véhicule peut être détectée au moyen de l'unité à capteur sensible à la position, laquelle demande est exprimée par l'utilisateur en touchant et/ou en se rapprochant d'une représentation graphique du système du véhicule et/ou d'un système du véhicule ou d'un élément du véhicule associé à l'utilisation et/ou à l'exécution de la fonction du véhicule ou de la situation de conduite, dans lequel l'unité de sortie (2) fait ressortir graphiquement, notamment de manière colorée, dans l'au moins une vue partielle, les systèmes et/ou éléments du véhicule et/ou des groupes de ceux-ci sur lesquels ils existe des informations pouvant être fournies en sortie, et des systèmes et/ou éléments du véhicule et/ou groupes de ceux-ci avec lesquels des fonctions du véhicule ou des situations de conduite peuvent être mis en oeuvre ou utilisés, et sur lesquels il existe des informations pouvant être fournies en sortie.

2. Dispositif selon la revendication 1, **caractérisé en ce qu'**un personnage virtuel anthropomorphique pouvant être généré au moyen de l'unité de sortie (2) est prévu pour la sortie d'informations et/ou pour le support à la sortie d'informations.

3. Dispositif selon la revendication 1 ou 2, **caractérisé en ce qu'**au moins un système de caméra (22) est prévu pour détecter le comportement de l'utilisateur et **en ce que** la fourniture des informations s'effectue en outre en fonction du comportement du conducteur détecté par le système de caméra (22).

4. Dispositif selon la revendication 3, **caractérisé en ce que** la direction du regard de l'utilisateur peut être détectée par le système de caméra (22) et **en ce que** la fourniture des informations s'effectue en fonction de la direction du regard de l'utilisateur.

5. Dispositif selon l'une quelconque des revendications précédentes, **caractérisé en ce qu'**un guidage interactif de l'utilisateur pour commander les fonctions du véhicule et/ou des situations de conduite peut être mis en oeuvre sur la base des informations présentées au moyen de l'unité de sortie (2).

6. Dispositif selon l'une quelconque des revendications précédentes, **caractérisé en ce que** l'afficheur graphique comportant l'unité à capteur sensible à la position est réalisé sous la forme d'un écran tactile.

7. Dispositif selon l'une quelconque des revendications précédentes, **caractérisé en ce que** la vue partielle comprend des éléments graphiques (42) permettant de déclencher une représentation d'autres vues partielles en touchant ou en se rapprochant de ces éléments graphiques (42).

8. Dispositif selon l'une quelconque des revendications précédentes, **caractérisé en ce que** l'au moins une vue graphique fait partie d'un système de menus graphiques, notamment hiérarchiques, permettant de détecter la demande par l'utilisateur des informations pouvant être fournies en sortie.

9. Dispositif selon l'une quelconque des revendications précédentes, **caractérisé en ce qu'**un type sortie d'informations comprend une représentation graphique d'au moins une partie des informations pouvant être fournies en sortie, dans lequel la représentation graphique comprend en outre des éléments qui contiennent de préférence des informations alphanumériques pour détecter une demande par l'utilisateur d'une sortie d'informations constituées d'autres informations pouvant être fournies en sortie associées à l'au moins une partie des informations pouvant être fournies en sortie et/ou pour une navigation par menu.

10. Dispositif selon l'une quelconque des revendications précédentes, **caractérisé en ce qu'**il est prévu un mode d'information dans lequel une manipulation ou un actionnement interactif d'un système réel du véhicule ou d'une fonction réelle du véhicule peut être interprété comme étant une demande par l'utilisateur d'une sortie d'informations concernant le système de véhicule correspondant ou la fonction de véhicule correspondante.

11. Dispositif selon l'une quelconque des revendications précédentes, **caractérisé en ce que** les types de sortie d'informations sont au moins partiellement configurables individuellement.

12. Dispositif selon l'une quelconque des revendications précédentes, **caractérisé en ce que** les types de sortie d'informations peuvent être complétés et individualisés par des moyens de présentation supplémentaires.

13. Dispositif selon l'une quelconque des revendications précédentes, **caractérisé en ce qu'**il comprend une fonction d'apprentissage au moyen de laquelle l'utilisation d'au moins une fonction du véhicule peut être apprise par un utilisateur en se conformant activement à des instructions fournies au moyen de l'unité d'explication (11), dans lequel le conducteur reçoit des réponses positives ou négatives en fonction des manipulations qu'il effectue de l'unité d'explication (11).

14. Dispositif selon l'une quelconque des revendications précédentes, **caractérisé en ce que** les informations présentées au moyen de l'unité d'analyse (2), notamment les instructions fournies au moyen de l'unité d'explication (1) consistent en le guidage interactif de l'utilisateur afin qu'il commande des fonctions du véhicule et/ou des situations de conduite en fonction d'une interaction réelle de l'utilisateur avec le véhicule, notamment avec les systèmes réels du véhicule et les fonctions réelles du véhicule.

15. Dispositif selon l'une quelconque des revendications précédentes, **caractérisé en ce que** l'unité de sortie (2) est au moins réalisée sous la forme d'une partie d'une unité de commande multifonction et/ou d'un système de navigation.

16. Dispositif selon l'une quelconque des revendications précédentes, **caractérisé en ce qu'**au moins un marqueur peut être positionné selon les nécessités par l'utilisateur au moyen d'un dispositif d'entrée, de telle sorte que la sortie d'informations déjà sélectionnées et pouvant être fournies au moyen de l'unité d'explication (11) à un instant courant, puisse être décalée à un instant ultérieur.

17. Dispositif selon l'une quelconque des revendications précédentes, **caractérisé en ce que** le dispositif d'entrée est réalisé sous la forme d'un système de reconnaissance de la parole (24).

18. Dispositif selon la revendication 17, **caractérisé en ce qu'**au moins une grandeur caractéristique vocale de l'utilisateur peut être détectée au moyen du système de reconnaissance vocale (24).

19. Procédé de sortie d'informations et/ou d'aide à l'utilisateur d'un véhicule à moteur, comprenant :
- au moins une unité de sortie (2) destinée à fournir en sortie des informations,
- au moins une unité de détection destinée à détecter des données d'état concernant des composants de véhicule (5) et/ou des données concernant une situation de conduite et/ou de conducteur (6, 1),
- au moins une unité d'analyse (10) destinée à analyser et à interpréter les données détectées par l'unité de détection,
- au moins une unité d'explication (11) destinée à sélectionner et à fournir des informations et/ou une aide à l'utilisateur en fonction des données analysées et interprétées par l'unité d'analyse (10),
dans lequel, pour présenter les informations fournies en sortie, au moins l'un d'une pluralité de types de sorties d'informations disponibles est sélectionné et défini en fonction de la situation de conduite et/ou de la demande de l'utilisateur et la fourniture et la sortie des informations s'effectuent automatiquement en fonction d'une situation de conduite et/ou d'un point dans le temps déterminé par l'utilisateur et/ou par l'unité d'explication (11), dans lequel l'au moins une unité de sortie (2) comprend un afficheur graphique qui est relié à une unité à capteur sensible à la position, **caractérisé en ce qu'**au moins une vue partielle du véhicule à moteur est représentée graphiquement sur l'afficheur, et **en ce qu'**une demande par l'utilisateur d'une sortie d'informations concernant une fonction du véhicule, une situation de conduite et/ou un système du véhicule est détectée au moyen de l'unité à capteur sensible à la position, dans lequel la demande de l'utilisateur est exprimée par l'utilisateur en touchant et/ou en se rapprochant d'une représentation graphique du système du véhicule et/ou d'un système du véhicule ou d'un élément du véhicule associé à l'utilisation et/ou à l'exécution de la fonction du véhicule ou de la situation de conduite,
dans lequel les systèmes et/ou éléments du véhicule et/ou des groupes de ceux-ci sur lesquels il existe des informations pouvant être fournies en sortie, et les systèmes du véhicule ou les éléments du véhicule et/ou des groupes de ceux-ci avec lesquels des fonctions du véhicule et/ou des situations de conduite peuvent être mises en oeuvre ou utilisées, et sur lesquels il existe des informations pouvant être fournies en sortie, sont représentées de manière à les faire ressortir, notamment de manière colorée, dans l'au moins une vue partielle.

20. Procédé selon la revendication 19, **caractérisé en ce qu'**un personnage virtuel anthropomorphique pouvant être généré au moyen de l'unité de sortie (2) est prévu pour la sortie d'informations et/ou pour le support à la sortie d'informations.

21. Procédé selon la revendication 19 ou 20, **caractérisé en ce qu'**au moins un système de caméra (22) est prévu pour détecter le comportement de l'utilisateur et **en ce que** la fourniture des informations s'effectue en outre en fonction du comportement du conducteur détecté par le système de caméra (22).

22. Procédé selon la revendication 21, **caractérisé en ce que** la direction du regard de l'utilisateur peut être détectée par le système de caméra (22) et **en ce que** la fourniture des informations s'effectue fonction de la direction du regard de l'utilisateur.

23. Procédé selon l'une quelconque des revendication 19 à 22, **caractérisé en ce qu'**un guidage interactif de l'utilisateur pour commander les fonctions du véhicule et/ou des situations de conduite peut être mis en oeuvre sur la base des informations présentées au moyen de l'unité de sortie (2).

24. Procédé selon l'une quelconque des revendications 19 à 23, **caractérisé en ce que** l'afficheur graphique comportant l'unité à capteur sensible à la position est réalisé sous la forme d'un écran tactile et **en ce que** la demande de l'utilisateur est détectée au moyen de l'écran tactile.

25. Procédé selon l'une quelconque des revendications 19 à 24, **caractérisé en ce que** des éléments graphiques (42) sont représentés dans la vue partielle pour permettre ainsi une représentation d'autres vues partielles en touchant ou en se rapprochant de ces éléments graphiques (42).

26. Procédé selon l'une quelconque des revendications 19 à 25, **caractérisé en ce que** l'au moins une vue graphique fait partie d'un système de menus graphiques, notamment hiérarchiques, permettant de détecter la demande par l'utilisateur des informations pouvant être fournies en sortie.

27. Procédé selon l'une quelconque des revendications 19 à 26, **caractérisé en ce que** pour un type sortie d'informations, au moins une partie des informations pouvant être fournies en sortie est représentée graphiquement, dans lequel la représentation graphique comprend en outre des éléments qui contiennent de préférence des informations alphanumériques pour détecter une demande par l'utilisateur d'une sortie d'informations constituées d'autres informations pouvant être fournies en sortie associées à l'au moins une partie des informations pouvant être fournies en sortie et/ou pour une navigation par menu.

28. Procédé selon l'une quelconque des revendications 19 à 27, **caractérisé en ce qu'**il est prévu un mode d'information dans lequel une manipulation ou un actionnement interactif d'un système réel du véhicule ou d'une fonction réelle du véhicule peut être interprété comme étant une demande par l'utilisateur d'une sortie d'informations concernant le système de véhicule correspondant ou la fonction de véhicule correspondante.

29. Procédé selon l'une quelconque des revendications 19 à 28, **caractérisé en ce que** les types de sortie d'informations sont au moins partiellement configurées individuellement.

30. Procédé selon l'une quelconque des revendications 19 à 29, **caractérisé en ce que** les types de sortie d'informations sont complétés et individualisés par des moyens de présentation supplémentaires.

31. Procédé selon l'une quelconque des revendications 19 à 30, **caractérisé en ce que** le dispositif comprend une fonction d'apprentissage au moyen de laquelle l'utilisation d'au moins une fonction du véhicule est apprise par un utilisateur en se conformant activement à des instructions fournies au moyen de l'unité d'explication (11), dans lequel le conducteur reçoit des réponses positives ou négatives en fonction des manipulations qu'il effectue de l'unité d'explication (11).

32. procédé selon l'une quelconque des revendications 19 à 31, **caractérisé en ce que** les informations présentées au moyen de l'unité d'analyse (2), notamment les instructions fournies au moyen de l'unité d'explication (1) consistent en le guidage interactif de' l'utilisateur afin qu'il commande des fonctions du véhicule et/ou des situations de conduite en fonction d'une interaction réelle de l'utilisateur avec le véhicule, notamment avec les systèmes réels du véhicule et les fonctions réelles du véhicule.

33. Procédé selon l'une quelconque des revendications 19 à 32, **caractérisé en ce que** l'unité de sortie (2) est au moins réalisée sous la forme d'une partie d'une unité de commande multifonction et/ou d'un système de navigation.

34. Procédé selon l'une quelconque des revendications 19 à 33, **caractérisé en ce qu'**au moins un marqueur est positionné selon les nécessités par l'utilisateur au moyen d'un dispositif d'entrée, de telle sorte que la sortie d'informations déjà sélectionnées et pouvant être fournies au moyen de l'unité d'explication (11) à un instant courant, soit décalée à un instant ultérieur.

35. Procédé selon l'une quelconque des revendications 19 à 34, **caractérisé en ce que** le dispositif d'entrée est réalisé sous la forme d'un dispositif de reconnaissance de la parole.

36. Procédé selon la revendication 35, **caractérisé en ce qu'**au moins une grandeur caractéristique vocale de l'utilisateur est détectée au moyen du dispositif de reconnaissance vocale.
